# EUROPÄISCHE PATENTSCHRIFT

(11) **EP 1 409 963 B1**
(45) Veröffentlichungstag und Bekanntmachung des Hinweises auf die Patenterteilung: **12.12.2007**
(21) Anmeldenummer: 02718208.8
(22) Anmeldetag: 28.03.2002
(51) Int. Cl.: G01D 5/14

(54) **SENSOR UND VERFAHREN ZUR ERFASSUNG VON MESSGRÖSSEN UND PHYSIKALISCHEN PARAMETERN**
SENSOR AND METHOD FOR DETECTING MEASUREMENT VARIABLES AND PHYSICAL PARAMETERS
CAPTEUR ET PROCEDE DE DETERMINATION DE GRANDEURS DE MESURE ET DE PARAMETRES PHYSIQUES

(30) Priorität: 30.03.2001 DE 10115715
(43) Veröffentlichungstag der Anmeldung: 21.04.2004
(73) Patentinhaber: Ploechinger, Heinz, 4785 Freinberg (Bez. Schärding) (AT)
(72) Erfinder: Ploechinger, Heinz, 4785 Freinberg (Bez. Schärding) (AT)
(86) Internationale Anmeldenummer: PCT/EP2002/003552
(87) Internationale Veröffentlichungsnummer: WO 2002/079729

(56) Entgegenhaltungen:
- DE-C- 4 444 409
- GB-A- 2 206 211
- US-A- 5 228 340

## Beschreibung

Die vorliegende Erfindung bezieht sich auf Sensoren zum Erfassen physikalischer Parameter, wie z. B. des Drucks, der Wärmeleitfähigkeit und der Dielektrizitätskonstante, oder zum Erfassen von Meßgrößen, wie z. B. den Füllstand eines Flüssigkeitstanks, die Ölqualität, die Strömungsgeschwindigkeit einer Flüssigkeit, die Neigung oder Beschleunigung des Sensors oder den Aggregatzustand eines Stoffes. Insbesondere bezieht sich die vorliegende Erfindung auf Sensoren, deren Meßprinzip auf Aufladungs- oder Aufheizvorgängen, Wärmebilanzen, Wärmemitnahmen oder allgemein Energiebilanzen basiert.

Im Stand der Technik seit langem bekannt und vielfach angewendet existieren Meßverfahren, die ein Gleichgewichtsverhältnis zwischen einer zugeführten und abgegebenen Energie in einem Sensorsystem verwenden. Ein Beispiel hierfür ist das Pirani-Prinzip zur Messung des Gasdrucks in einem Behälter. Eine erste Möglichkeit, das Pirani-Prinzip zur Messung des Gasdrucks in einem Sensor zu realisieren, besteht darin, einen Meßfaden mit dem Meßgas in dem Behälter in Kontakt zu bringen, und denselben bei einer vorgegebenen, bekannten zugeführten Leistung so lange zu erhitzen, bis die durch das Meßgas abgeführte Leistung der bekannten zugeführten Leistung entspricht. Die sich bei diesem Gleichgewichtszustand einstellende Temperatur des Meßfadens ist ein Maß für den Gasdruck in dem Behälter. Der Nachteil dieser Umsetzung des Pirani-Prinzips zur Messung des Gasdrucks besteht darin, daß der thermische Prozeß eine träge Reaktion der Meßvorrichtung bzw. des Sensors zur Folge hat, und daß folglich für eine Messung eine lange Meßzeit und viel Energie erforderlich ist.

Ein schnelleres Ansprechen bzw. eine kürzere Meßzeit erreicht man in der Pirani-Anordnung dadurch, daß man eine Solltemperatur des Meßfadens einregelt. Die Leistung, die hierfür von einem das Pirani-Prinzip auf diese Weise realisierenden Sensor benötigt wird, ist wiederum ein Maß für den Gasdruck in dem Behälter. Ein Nachteil dieser Realisierung besteht jedoch darin, daß die zur Messung erforderliche Leistung kontinuierlich zugeführt werden muß, was einen erhöhten Energieverbrauch zur Folge hat.

Die DD249534A1 (ISSN 0433-6461) mit dem Titel "Verfahren und Anordnung zur Druckmessung von Gasen" offenbart einen Gasdrucksensor, der einen von einem Meßgas umgebenen Meßwiderstand impulsmäßig speist und nach jedem Impuls die Abkühlzeit des Meßwiderstandes als Funktion des Druckes durch schwellenwertabhängige Auswertung des Spannungsabfalls über dem Meßwiderstand mißt. Folglich wird hierbei die Abhängigkeit der Abkühlzeit von dem herrschenden Druck zur Druckmessung ausgenutzt. Obwohl durch diesen Sensor die zur Messung des Druckes erforderliche Energie reduziert wird, besteht dennoch ein Nachteil dieses Sensors darin, daß die impulsweise Speisung mit festen Impulsdauern des Meßwiderstandes zunächst zu einer unbekannten Aufheizung des Meßdrahtes führt. Ist die Wärmeabfuhr des Meßwiderstandes aufgrund eines sehr geringen Druckes beispielsweise sehr klein, so nehmen die Meßdauern zur Messung der Abkühlzeit des Meßwiderstandes unakzeptabel hohe Werte an. Ein Korrigieren der Impulsspeisungszeitdauern ist regelungstechnisch aufwendig und zudem erst nachdem ersten Speisungsimpuls und dem ersten Abkühlvorgang möglich. Nachteilig ist ferner, daß hier zwei Größen, nämlich die Impuls-Energie und der Gleichanteil, der zur Messung des Temperaturabfalls notwendig ist, genau eingehalten werden müssen, um reproduzierbare Messungen zu ermöglichen.

Ein ähnliches Meßverfahren wie dasjenige, das in dem letztgenannten Dokument beschrieben wird, wird von der acammesselectronic GmbH in dem Datenblatt TDC-GP1, Kapitel 2.7.1, für eine Widerstandsbestimmung vorgeschlagen. Ein Kondensator wird über einen unbekannten Widerstand entladen, wobei die Entladezeit gemessen wird, die vergeht, bis die Spannung des Kondensators von Beginn der Entladung eine Spannungsschwelle unterschreitet. Der gleiche Meßvorgang wird mit einem Referenzwiderstand mit einem bekannten Widerstandswert durchgeführt. Das Verhältnis der resultierenden Zeitdauern ist gleich dem Verhältnis der beiden Widerstände, so daß der Widerstandswert des unbekannten Widerstandes berechnet werden kann. Diese Verhältnismessung ist jedoch ungeeignet, wenn sich der zu bestimmende Widerstand während der Messung beispielsweise durch Aufheizen verändert. Ähnlich zu der letztgenannten Druckmessung besteht ein Nachteil dieses Widerstandsbestimmungsverfahrens darin, daß der Meßkondensator zunächst vollständig aufgeladen werden muß. Der in diesem Kondensator gespeicherte begrenzte Energievorrat ist zudem für Heizvorgänge wie bei dem Pirani-Prinzip unzureichend, da sich wegen der Entladekurve ein ungünstiger Temperaturverlauf ergäbe.

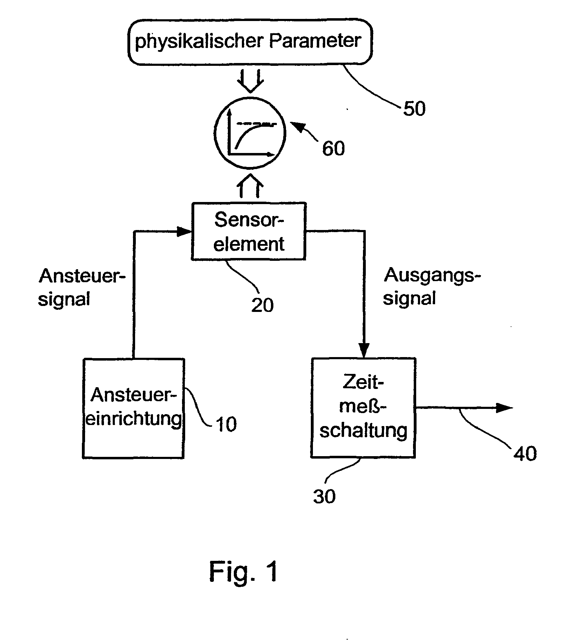

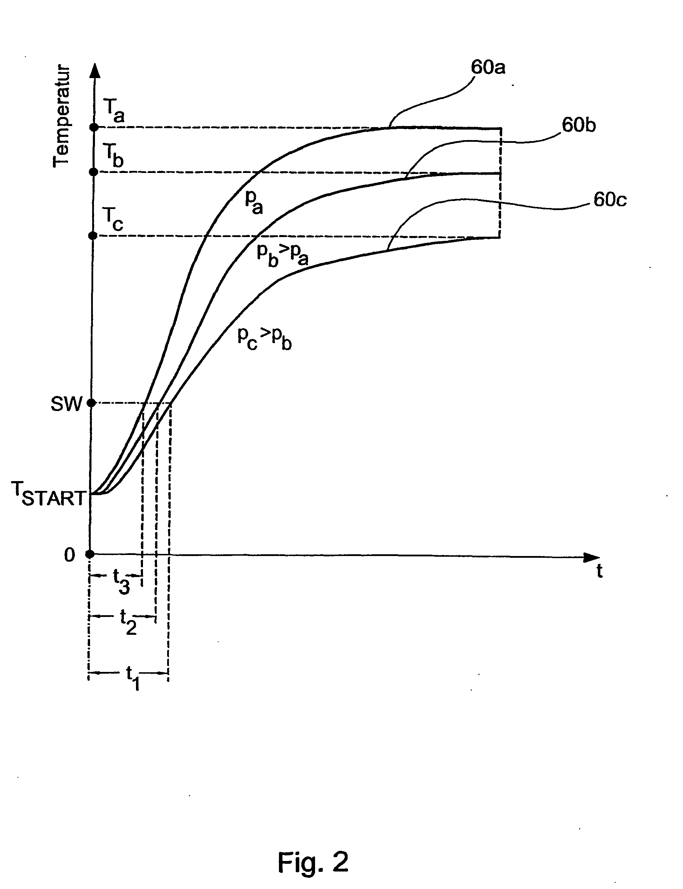

Das Dokument DE 44 44 409 C1 offenbart weiter eine Einrichtung zum Messen der Induktivität einer Spule, wie sie beispielsweise anhand der Fig. 1 oder der Fig. 2 zu erkennen ist. Dort wird, wie aus der Beschreibung hervorgeht, die Spule S mit dem Ansteuersignal UB beaufschlagt, wobei es sich bei dem Ansteuersignal UB um eine Batteriespannung handelt, wie in Spalte 1, Zeile 49 dargelegt ist. In Spalte 2, Zeilen 13-15 wird dargelegt, daß diese Spannung an die Induktivität L angelegt wird. Nachdem es sich bei der Spannung UB um einen konstanten Wert handelt, offenbart das Dokument D1 somit keine Ansteuereinrichtung, die an die dortige Spule S das Ansteuersignal UB mit einem vorbestimmten Signalverlauf mit stetig ansteigenden Bereichen anliegen würde.

Gleiches gilt für das Dokument GB 2 206 211 A, welches eine Sensorschaltung offenbart, die hinsichtlich der Ansteuerleistung für die Sensorwiderstände R1 und R2 keine weitergehenden Informationen enthält. Wie aus dem Schaltungsdiagramm zu entnehmen ist, sind die Sensorwiderstände R1 und R2 zwischen die Versorgungsleitung Vs und Masse geschaltet, so daß auch hier der herkömmliche Ansatz zu erkennen ist, die Sensoren mit einem konstanten Leistungssignal zu versorgen.

Auch das Dokument US-A-5,228,340 beschreibt eine Sensorvorrichtung, bei der, wie aus Spalte 2, Zeilen 64-66 hervorgeht, stets konstante Ströme, wenn auch intermittierend, an einen Heizwiderstand angelegt werden, so daß auch hier kein Signalverlauf mit stetig ansteigenden Bereichen existiert, der als Ansteuersignal an den im Dokument D3 erwähnten Heizwiderstand angelegt würde.

Die Aufgabe der vorliegenden Erfindung besteht darin, einen Sensor und ein Verfahren zum Erzeugen eines Signals, das einen vorbestimmten physikalischen Parameter anzeigt zu schaffen, so daß der zur Erfassung erforderliche Leistungsbedarf geringer ist.

Diese Aufgabe wird durch einen Sensor gemäß Anspruch 1 oder ein Verfahren gemäß Anspruch 16 gelöst.

Ein erfindungsgemäßer Sensor zum Erzeugen eines Signals, das einen vorbestimmten physikalischen Parameter anzeigt, umfaßt ein Sensorelement, an das ein Ansteuersignal anlegbar ist und das abhängig von dem vorbestimmten physikalischen Parameter und dem Ansteuersignal ein Ausgangssignal erzeugt. Es ist ferner eine Ansteuereinrichtung vorgesehen, die das Ansteuersignal mit einem vorbestimmten Signalverlauf derart an das Sensorelement anlegt, daß das Ausgangssignal des Sensorelements einen vorbestimmten Schwellenwert erreicht. Eine Zeitmeßschaltung des Sensors erfaßt die Zeitdauer, bis zu der das Ausgangssignal ausgehend von einem vorbestimmten Startwert des Ausgangssignals den vorbestimmten Schwellenwert erreicht, und erzeugt aus der Zeitdauer das den physikalischen Parameter anzeigende Signal.

Eine erfindungsgemäße Sensorvorrichtung zum Erfassen einer durch einen physikalischen Parameter bestimmbaren Meßgröße umfaßt über den erfindungsgemäßen Sensor hinaus eine Auswerteeinrichtung, die basierend auf dem den physikalischen Parameter anzeigenden Signal des Sensors auf die Meßgröße rückschließt und dieselbe ausgibt.

Ein erfindungsgemäßes Verfahren zum Erzeugen eines Signals, das einen vorbestimmten physikalischen Parameter anzeigt, umfaßt das Anlegen eines Ansteuersignals mit einem vorbestimmten Signalverlauf an ein Sensorelement, an das das Ansteuersignal anlegbar ist, und das abhängig von dem vorbestimmten physikalischen Parameter und dem Ansteuersignal ein Ausgangssignal erzeugt, wobei das Ansteuersignal mit dem vorbestimmten Signalverlauf derart angelegt wird, daß das Ausgangssignal des Sensorelements einen vorbestimmten Schwellenwert erreicht. Zusätzlich wird die Zeitdauer erfaßt, bis zu der das Ausgangssignal ausgehend von einem vorbestimmten Startwert des Ausgangssignals den vorbestimmten Schwellenwert erreicht, wobei daraufhin aus der erfaßten Zeitdauer das den physikalischen Parameter anzeigende Signal erzeugt wird.

Der physikalische Parameter kann der Druck, die Wärmeleitfähigkeit und die Dielektrizitätskonstante der Umgebung sein. Die erfindungsgemäße Sensorvorrichtung kann beispielsweise ein Gas- oder Flüssigkeitsfüllstandssensor, ein Dichte-Sensor oder ein Strömungs-, Neigungs-, Beschleunigungs- oder Drehratenerfassungssensor sein.

Der vorliegenden Erfindung liegt die Erkenntnis zugrunde, daß bereits nach dem Einschalten eines entsprechenden Sensors in der Anstiegsflanke des Ausgangssignals des Sensors die Information enthalten ist, die aus dem Ausgangssignal herkömmlicher Weise erst in dem eingeschwungenen Zustand bzw. im Gleichgewichtszustand erhalten wird, bzw. bereits dann enthalten ist, wenn man den Sensor mit einem vordefinierten Signal beaufschlagt, daß zu einer Sensor-Zustandsänderung im Messraum, wie z.B. einer Temperaturänderung führt. Erfindungsgemäß wird dieser Umstand dadurch ausgenutzt, daß die Zeitdauer gemessen wird, bis zu der das Ausgangssignal noch vor Erreichen eines eingeschwungenen Werts einen vorbestimmten Schwellenwert erreicht. Da die Anstiegsflanke des Ausgangssignals für vorbestimmte physikalische Parameter unterschiedliche Steilheit aufweist, ist die erfaßte Zeitdauer ein Maß für diese vorbestimmten physikalischen Parameter. Die pro Messung erforderliche Leistung kann reduziert werden, da die Leistung nicht bis zu dem eingeschwungenen Zustand zugeführt werden muß, und da keine ständige Leistungszufuhr erforderlich ist, wie es bei dem Einregeln eines bestimmten Sensorparameters erforderlich ist. Im Unterschied zu dem Drucksensor des DD249534A1 und dem im vorhergehenden beschriebenen Widerstandsbestimmungsverfahren wird gemäß der vorliegenden Erfindung ein übermäßiger Energieaufwand zur Bestimmung des Druckes bzw. des Widerstandes oder anderer physikalischer Parameter dadurch verhindert, daß die Zeitdauerbestimmung entlang der Anstiegsflanke, d.h. während eines physikalischen Vorgangs von einem Ruhezustand bis vor Erreichen eines eingeschwungenen Zustands, also beispielsweise bei Auflade- und Aufheiz-Vorgängen, und nicht bei Entlade- bzw. Abkühl-Vorgängen durchgeführt wird. Der Schwellenwert, an dem die Zeitdauerbestimmung beendet wird, legt auf diese Weise unabhängig von den Umgebungsbedingungen den erforderlichen Energieaufwand zur Messung im wesentlichen fest. Folglich wird durch die vorliegende Erfindung der zur Erfassung erforderliche Leistungsbedarf reduziert.

Gemäß einem bevorzugten Ausführungsbeispiel liegen der vorbestimmte Startwert und der vorbestimmte Schwellenwert außerhalb eines zulässigen Bereichs von möglichen, sich bei einem Gleichgewichtszustand einstellenden Werten des Ausgangssignals, wobei die Zeitdauer gemessen wird, die von dem Zeitpunkt an, da das Signal den Startwert überquert, bis zu dem Zeitpunkt, da das Ausgangssignal den Schwellenwert erreicht, vergeht, womit ein Aufheizvorgang oder Aufladevorgang abgeschlossen wird. Danach wird das Ansteuersignal von dem Sensorelement getrennt, wobei der nächste Meßzyklus beginnt, wenn das Ausgangssignal den Startwert erneut erreicht oder definiert unterschritten hat

Gemäß einem weiteren Ausführungsbeispiel sind neben dem Startwert mehrere Schwellenwerte vorgesehen, wobei zur Erzeugung des den vorbestimmten physikalischen Parameter angebenden Signals diejenige Zeitdauer herangezogen wird, die vergeht, bis das Ausgangssignal ausgehend von dem Startwert einen ausgewählten Schwellenwert der Mehrzahl von Schwellenwerten erreicht, wobei der ausgewählte Schwellenwert derart ausgewählt wird, daß die Zeitdauer eine vorbestimmte Minimalzeitdauer überschreitet bzw. in einem erwünschten Meßbereich liegt. Bei jeder Durchquerung eines nächsten Schwellenwerts der Mehrzahl von Schwellenwerten wird überprüft, ob die bis dahin vergangene Zeitdauer die Minimalzeitdauer überschreitet. Falls dies der Fall ist, wie die Zeitdauererfassung gestoppt. Auf diese Weise kann unter Erhöhung der Meßzykluszeitdauer die Meßgenauigkeit dynamisch erhöht werden.

Die Zeitdauererfassung wird vorzugsweise durch Vergleichseinrichtungen gesteuert, wobei eine Vergleichseinrichtung vorgesehen ist, die das Ausgangssignal von dem Sensorelement empfängt, das Ausgangssignal mit dem Startwert vergleicht und ein Startsignal an die Zeitmeßschaltung ausgibt, falls das Ausgangssignal gleich dem Startwert ist.

Umgekehrt ist vorzugsweise eine weitere Vergleichseinrichtung vorgesehen, die das Ausgangssignal von dem Sensorelement empfängt, das Ausgangssignal mit einem der Vergleichseinrichtung zugeordneten Schwellenwert vergleicht und ein der Vergleichseinrichtung zugeordnetes Stoppsignal an die Zeitmeßschaltung ausgibt, falls das Ausgangssignal gleich dem zugeordneten Schwellenwert ist.

Gemäß einem weiteren Ausführungsbeispiel wird zu Beginn eines Meßzyklus, d. h. bei Beginn des Aufheizvorganges, das Ausgangssignal von dem Sensorelement empfangen, um den Schwellenwert derart einzustellen, daß der Schwellenwert zu einem augenblicklichen Wert des Ausgangssignals einen vorbestimmten und festen Abstand aufweist, wodurch bei aufeinanderfolgenden Meßzyklen die Meßfrequenz erhöht wird.

Gemäß einem weiteren Ausführungsbeispiel werden ein Startschwellenwert als Startwert und der Schwellenwert derart eingestellt, daß sich dieselben in einem vorbestimmten und festen Abstand zu einem sich bei Gleichgewicht und ohne Anliegen des Ansteuersignals einstellenden Wert das Ausgangssignals befinden.

Bevorzugte Weiterbildungen der vorliegenden Erfindung sind in den beiliegenden Ansprüchen definiert.

Bevorzugte Ausführungsbeispiele der vorliegenden Erfindung werden nachfolgend bezugnehmend auf die beiliegenden Zeichnungen näher erläutert. Es zeigen:
- Fig. 1: ein schematisches Diagramm, das die erfindungsgemäße Rückführung der Erfassung eines vorbestimmten physikalischen Parameters auf die Erfassung einer Zeitdauer veranschaulicht;
- Fig. 2: einen Graphen, der den Temperaturanstieg eines Widerstandsdrahts bei verschiedenen Druckbedingungen darstellt;
- Fig. 3: einen Graphen, bei dem das Temperaturausgangssignal eines Sensors gemäß einem Ausführungsbeispiel der vorliegenden Erfindung gegen die Zeit aufgetragen ist;
- Fig. 4: einen Graphen, bei dem die Temperaturanstiegsflanken eines Widerstandsdrahts zusammen mit verschiedenen Schwellenwerten aufgetragen sind, um zu veranschaulichen, wie gemäß einem Ausführungsbeispiel der vorliegenden Erfindung die Zeitdauer in einen gewünschten Meßbereich verlagert werden kann;
- Fig. 5: ein Schaltungsdiagramm für einen Meßschaltung gemäß einem Ausführungsbeispiel der vorliegenden Erfindung;
- Fig. 6a: eine perspektivische Ansicht einer Meßdrahtanordnung gemäß einem Ausführungsbeispiel der vorliegenden Erfindung, bei dem zwei Widerstandsdrahtschleifen in oder auf einer Folie laminiert sind, wobei sich die Meßdrahtanordnung in einem gefalteten Zustand befindet;
- Fig. 6b: eine Draufsicht der Meßdrahtanordnung von Fig. 6a in einem entfalteten Zustand;
- Fig. 7: ein vereinfachtes Blockschaltbild eines kombinierten Sensors zur redundanten Sitzbelegungserkennung und Erkennung der Kopfstützenposition gemäß einem Ausführungsbeispiel der vorliegenden Erfindung;
- Fig. 8: eine perspektivische Ansicht eines Autositzes, in dem zwei Sensoren gemäß Fig. 7 eingebaut ist;
- Fig. 9: ein Schaltbild eines Sensors zur redundanten Topferkennung mit einem Schaltungsteil zur Temperaturmessung;
- Fig. 10a und 10b: schematische Zeichnungen, die zwei Ausführungsbeispiele der vorliegenden Erfindung zur Ölstandserfassung mit gleichzeitiger Ölqualitätserfassung und Öltemperaturerfassung veranschaulichen;
- Fig. 11: eine schematische Zeichnung, die eine gemeinsame Nutzung eines aus einem Flachbandkabel gebildeten Sensorelements zur kapazitiven und resistiven Füllstandsmessung veranschaulicht;
- Fig. 12: eine Sensoranordnung gemäß einem Ausführungsbeispiel, bei dem ein durch Stoßionisation erzeugter Ionenstrom zur Druckerfassung verwendet wird;
- Fig. 13a: eine Draufsicht eines Sensoraufbaus gemäß einem Ausführungsbeispiel der vorliegenden Erfindung, bei den durch eine Thermopile die abgestrahlte Wärme einer Heizwiderständsbahn in ein Spannungssignal umgewandelt wird; und
- Fig. 13b: eine Seitenschnittansicht des Sensoraufbaus in Fig. 13a.

Zunächst wird bezugnehmend auf Fig. 1 veranschaulicht, wie die Erfassung eines physikalischen Parameters auf die Messung einer Zeitdauer rückgeführt wird. In Fig. 1 sind eine Ansteuereinrichtung 10, ein Sensorelement 20 und eine Zeitmeßschaltung 30 gezeigt, die zusammen einen erfindungsgemäßen Sensor zum Erzeugen eines Signals 40 bilden, das einen vorbestimmten physikalischen Parameter 50 anzeigt. Das Sensorelement 20 ist vorzugsweise ein passives Element, wie z. B. ein kapazitives oder resistives Element bzw. Widerstandselement, wie z. B. ein Kondensator, ein Widerstandsdraht, eine Widerstandsbahn oder dergleichen. Auch eine Elektrodenanordnung zum Erzeugen eines Elektronen- oder Ionenstromes kann als Sensorelement verwendet werden. Das Sensorelement 20 ist durch die Ansteuereinrichtung 10 durch ein Ansteuersignal ansteuerbar, das beispielsweise ein Spannungssignal oder ein Stromsignal ist. Das Ansteuersignal wird mit einem bekannten zeitlichen Signalverlauf an dem Sensorelement 20 angelegt, derart, daß das Sensorelement ein Ausgangssignal abhängig von bestimmten Umgebungsparametern, die den physikalischen Parameter 50 umfassen, ändert. Bei bekannter Abhängigkeit 60 des Ausgangssignals von dem physikalischen Parameter während des Anlegens des Ansteuersignals durch entweder einen funktionellen Zusammenhang oder experimentelle Ergebnisse kann aus der Zeitdauer, wie schnell sich das Ausgangssignal bis zu einem bestimmten Schwellenwert ändert, der physikalische Parameter bestimmt bzw. auf denselben rückgeschlossen werden. Die Erfassung der Zeitdauer übernimmt die Zeitmeßschaltung 30, die eine Zeitmessung beim Erreichen des Schwellenwerts durch das Ausgangssignal stoppt und abhängig von der Zeitdauer ein Signal 40 ausgibt, das den physikalischen Parameter 50 anzeigt. Das Signal 40 kann in digitaler oder analoger Form ausgegeben werden, und kann den physikalischen Parameter entweder direkt in einer bestimmten Maßeinheit anzeigen oder lediglich indirekt, indem das Signal 40 die erfaßte Zeitdauer angibt. Wird der physikalische Parameter durch das Signal 40β direkt angegeben, so können hierzu geeignete Einrichtungen, wie z. B. zum Kalibrieren, Skalieren oder Durchführen komplexerer Auswertungen, vorgesehen sein.

Bezugnehmend auf Fig. 2 wird nun die Rückführung der Bestimmung eines physikalischen Parameters auf die Messung einer Zeitdauer anhand des Pirani-Prinzips erklärt, das bereits in der Beschreibungseinleitung beschrieben worden ist. Fig. 2 zeigt einen Graphen, bei dem die Temperatur eines Meßfadens gegen die Zeit in willkürlichen Einheiten aufgetragen ist, und in dem drei Temperaturverläufe 60a, 60b und 60c aufgetragen sind. Die in Fig. 2 gezeigten Temperaturverläufe 60a - 60c stellen die Temperaturänderung eines Pirani-Meßfadens nach dem Anlegen eines konstanten Stroms bei unterschiedlichen Drücken pₐ, p_{b} bzw. p_{c} dar. Wie es in Fig. 2 gezeigt ist, ist der Druck p_{c}, der dem Temperaturverlauf 60_{c} zugeordnet ist, größer als der Druck p_{b}, der wiederum größer als der Druck pₐ ist. Wie es ebenfalls ersichtlich ist, stellen sich bei den verschiedenen Drücken pₐ - p_{c} in einem eingeschwungenen Zustand und bei Anliegen des konstanten Stroms eingeschwungene Temperaturwerte Tₐ, T_{b} bzw. T_{c} ein. Bei einem höheren Druck ergibt sich aufgrund der höheren Dichte eine höhere Wärmeabfuhr des Meßfadens, so daß bei dem Druck pₐ der höchste Temperaturwert Tₐ auftritt.

Aus der Zeichnung ist ersichtlich, daß bereits kurz nach dem Einschalten des konstanten Stroms die Kurven 60a - 60c unterschiedliche Steilheiten aufweisen. Insbesondere schneiden die Temperaturverläufe 60a - 60c, die den verschiedenen Drücken pₐ - p_{c} zugeordnet sind, einen Temperaturschwellenwert SW, der unterhalb der Temperaturwerte Tₐ - T_{c} und in einem vorbestimmten Abstand zu einem Temperaturstartwert Tₛₜₐᵣₜ liegt, zu unterschiedlichen Zeitpunkten bzw. innerhalb verschiedener Zeitdauern t₁ - t₃, wobei der Temperaturstartwert Tₛₜₐᵣₜ die Umgebungstemperatur bestimmt, die sich bei Fehlen eines angelegten Stromes im Gleichgewichtszustand ergibt. Folglich läßt sich aus den Zeitdauern t₁ - t₃ ein Maß für den Druck p ableiten. Um aus den Zeitdauern t den Druck p abzuleiten, könnte entweder ein theoretischer hergeleiteter funktioneller Zusammenhang verwendet werden oder es könnten experimentell bestimmte Wertepaare (Zeitdauer-Druck) verwendet werden, die interpoliert oder in einer geeigneten analytischen Form, wie z. B. durch einen Least-Square-Fit, genähert werden.

Der Temperaturanstieg und somit das Anlegen eines definierten Stroms und letztendlich das Zuführen von Energie kann bereits an dem Schwellenwert SW gestoppt werden, während es herkömmlicherweise erforderlich war, die Energiezufuhr bis zu dem eingeschwungenen Zustand fortzuführen, bis sich die eingeschwungenen Temperaturen Tₐ - T_{c} einstellen, die üblicherweise als ein Maß für den Druck verwendet wurden. Es ist offensichtlich, daß das Integral der zugeführten Leistung bzw. Energie hier nur ein Bruchteil dessen ist, was man zum Erreichen des eingeschwungenen Zustands aufwenden muß. Folglich wird durch Anwenden der vorliegenden Erfindung der Energieverbrauch reduziert. Zudem ist es nicht erforderlich, das Erreichen des eingeschwungenen Zustands abzuwarten, so daß durch die Rückführung auf eine Zeitmessung eine Erhöhung der Meßfrequenzen ermöglicht wird, was zudem meist einen Vorteil in der weiteren Meßwertverarbeitung darstellt.

Bezugnehmend auf Fig. 2 wird darauf hingewiesen, daß, obwohl im vorhergehenden beschrieben wurde, daß als Ansteuersignal ein konstanter Strom verwendet wird, erfindungsgemäß ferner das Anlegen eines bestimmten festen und bekannten Stromverlaufs möglich ist, wie z.B. mit einem sägezahnartig ansteigenden oder abfallenden Verlauf, in Form eines Rechteckimpulses oder allgemein mit einem Anstieg/Abfall nach einer mathematischen Funktion, wie z.B. einer Parabel-, Sinus- oder Exponentialfunktion. In diesem Fall ergeben sich andere Temperaturverläufe 60a - 60c, die jedoch ebenfalls für jeden Druck einen festen vorbestimmten Verlauf aufweisen und deshalb den Schwellenwert SW nach Ablauf bestimmter Zeitdauern t₁ - t₃ von dem Temperaturstartwert Tₛₜₐᵣₜ aus erreichen, wobei die Zeitdauern auf eine vorbestimmte Weise von dem zu erfassenden physikalischen Parameter, d. h. dem Druck, abhängen.

Es wird ferner darauf hingewiesen, daß es für die erfindungsgemäße Rückführung auf eine Zeitmessung nicht erforderlich ist, daß sich eingeschwungene Meßwerte ergeben, die sich in Abhängigkeit von dem zu erfassenden physikalischen Parameter unterscheiden. Bei anderen Meßaufgaben kann es sein, daß sich in einem breiten Meßbereich des physikalischen Parameters der selbe eingeschwungene Meßwert bzw.

Ausgangssignalwert ergibt. Der Schwellenwert SW wird jedoch vorteilhafterweise derart oberhalb des Startwerts eingestellt, daß sich für den Meßbereich des zu erfassenden physikalischen Parameters eine größtmögliche Verteilung der zum Erreichen des Schwellenwerts benötigten Zeitdauern tᵢ ergibt.

Obwohl in Fig. 2 Ausgangssignalverläufe mit positiver Steigung gezeigt sind, ist es ferner möglich, daß die vorliegende Erfindung bei Meßaufgaben eingesetzt wird, bei denen sich das Ausgangssignal abhängig von dem physikalischen Parameter mit einer negativen Steigung ändert. In diesem Fall liegt der Schwellenwert SW in einem eingestellten Abstand unterhalb des Startwerts und oberhalb der sich einstellenden eingeschwungenen Ausgangssignalwerte.

Nachdem bezugnehmend auf Fig. 2 das Prinzip der vorliegenden Erfindung anhand des Pirani-Prinzips veranschaulicht worden ist, werden bezugnehmend auf Fig. 2 - 4 verschiedene Ausführungsbeispiele beschrieben, die verschiedene Möglichkeiten darstellen, wie die Erfassung des physikalischen Parameters vorteilhafter Weise in aufeinanderfolgenden Meßzyklen erzielt werden kann, wobei wiederum auf das Pirani-Prinzip Bezug genommen wird, um die Darstellung zu vereinfachen.

Bezugnehmend auf Fig. 2 wurde im vorhergehenden die Erfassung des Drucks von einem Zeitpunkt an beschrieben, bei dem sich der Meßfaden bei einer bestimmten und bekannten Anfangstemperatur T_{Start} befand, d. h. der sich bei nicht anliegenden Strom ergebenden Temperatur bzw. der sich in einem Gleichgewichtszustand einstellenden Temperatur oder kurz der Umgebungstemperatur. Von dieser Anfangstemperatur Tₛₜₐᵣₜ ab wurde der Meßfaden bis auf einen sich in einem bestimmten Abstand von der Anfangstemperatur befindenden Schwellenwert aufgeheizt, wobei die hierfür benötigte Zeitdauer erfaßt wurde. Um nun in einem zweiten Meßzyklus eine weitere Druckerfassung vorzunehmen, kann es, wenn keine schnellen Änderungen der Meßgröße, d. h. des Drucks, zu erwarten sind, ausreichend sein, den Meßvorgang in einem Rhythmus zu wiederholen, der genügend Zeit zum Abkühlen des Meßfadens auf Umgebungsniveau, d. h. auf die Starttemperatur T_{Start}, oder darunter läßt. Der nächste Meßzyklus würde daraufhin erst bei Erreichen oder Unterschreiten von T_{Start} beginnen.

Bei einem weiteren Ausführungsbeispiel wird im wesentlichen gleichzeitig mit dem Einschalten des Meßfadens dessen Starttemperatur T_{Start} erfaßt, wobei der Schwellenwert SW in einem festen Abstand zu dieser Starttemperatur verschoben wird. Auf diese Weise kann der Beginn des nächsten Meßzyklus nach vorne verlegt werden, da es nicht erforderlich ist, das Abkühlen des Meßfadens auf Umgebungsniveau bzw. Umgebungstemperatur abzuwarten. Folglich kann hierdurch die Meßfrequenz bei einer Meßreihe erhöht werden. Die sich bei diesem Ausführungsbeispiel ergebende Zeitdauer ist in einem genügend großen Temperaturbereich unabhängig von der Starttemperatur, da die Temperaturanstiegsflanken in dem Fall der Pirani-Messung in einem genügend großen Temperaturbereich gleichbleibend linear sind, d. h. mit gleichbleibender Steigung.

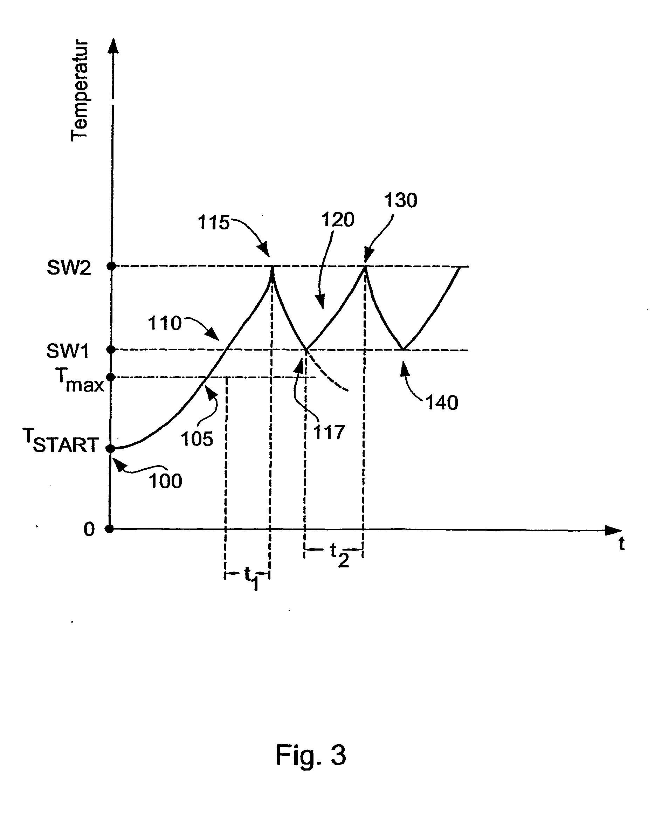

Anhand von Fig. 3 wird ein weiteres Ausführungsbeispiel veranschaulicht, bei dem schnelle Änderungen des physikalischen Parameters bzw. der Meßgröße mit höherer Meßfrequenz erfaßt werden können. Fig. 3 zeigt einen Graphen, bei dem die Temperatur über die Zeit in willkürlichen Einheiten aufgetragen ist, wobei der Graph von Fig. 3 insbesondere einen Temperaturverlauf eines Meßfadens zeigt, der sich bei einem Ausführungsbeispiel ergibt, bei dem zur Zeitdauererfassung zwei Schwellenwerte verwendet werden. Die zwei Schwellenwerte SW1 und SW2 werden derart eingestellt, daß dieselben beide in einem vorbestimmten Abstand über der Starttemperatur bzw. über der sich bei Nicht-Anliegen eines Stromes und bei Gleichgewicht einstellenden Umgebungstemperatur liegen. Zudem liegen die Schwellenwerte SW1 und SW2 über einer maximal zulässigen Umgebungstemperatur Tₘₐₓ, wie z. B. der oberen Regelungstemperatur in einer temperaturgeregelten Druckkammer.

Wie es in Fig. 3 gezeigt ist, steigt die Temperatur des Meßfadens nach Einschalten des konstanten Stroms bei 100 zunächst an und überschreitet dabei bei 105 die Temperatur Tₘₐₓ und danach bei 110 den Schwellenwert SW1. Beim Überschreiten des Schwellenwerts SW1 wird eine Zeitmessung begonnen, die erst dann endet, wenn die Temperatur des Meßfadens bei 115 den Schwellenwert SW2 erreicht, wobei die hierzu benötigte Zeitdauer t₁ beträgt. Die Zeitdauer t₁ ist wiederum ein Maß für den Druck, wie es bezugnehmend auf Fig. 2 erörtert wurde, da die Steilheit der Temperaturanstiegsflanken von dem Druck abhängt, so daß aus der Zeitdauer t₁ auf den Druck rückgeschlossen werden kann.

Bei dem in Fig. 3 gezeigten Ausführungsbeispiel wird nun der nächste Meßzyklus bereits dann wieder begonnen, wenn nach dem Abschalten des konstanten, an dem Meßfaden anliegenden Stroms bei Erreichen des Schwellenwerts SW2 (115) die Temperatur des Meßfadens bei 117 wieder den Schwellenwert SW1 erreicht hat, wonach der konstante Ansteuer- bzw. Heizstrom wieder eingeschaltet wird und der neue Meßzyklus beginnt. Während des neuen Meßzyklus steigt die Temperatur des Meßfadens bei 120 durch den konstanten Strom wieder an, bis sie bei 130 den Schwellenwert SW2 erreicht, zu welchem Zeitpunkt die zweite Zeitdauererfassung t₂ abgeschlossen wird, und wonach die Temperatur des Meßfadens wieder abfällt, bis sie bei 140 den Schwellenwert SW1 erreicht, zu welchem Zeitpunkt wiederum der nächste Meßzyklus beginnt. In dem Fall, daß sich der Druck zwischen zwei aufeinanderfolgenden Meßzyklen nicht geändert hat, sind die beiden Zeitdauern t₁ und t₂ identisch, während, wenn sich der Druck erhöht hat, die zweite gemessene Zeitdauer t₂ größer ist, da mit zunehmendem Druck die Steilheit der Temperaturanstiegsflanke abnimmt, wie es aus Fig. 2 ersichtlich ist. Insgesamt ergibt sich bei dem Ausführungsbeispiel von Fig. 3 somit ein Betrieb mit impulsmäßiger Ansteuerung und Messung.

Das in Fig. 3 gezeigte Ausführungsbeispiel ist insbesondere deshalb vorteilhaft, da zum Anfangen eines neuen Meßzyklus nicht das Erreichen eines bestimmten Umgebungstemperaturniveaus abgewartet werden muß. Steht bei dem in Fig. 3 gezeigten Ausführungsbeispiel zudem ein Signal für die Umgebungstemperatur zur Verfügung, so können ähnlich zu dem im vorhergehenden Ausführungsbeispiel, bei dem der Schwellenwert SW in einem festen Abstand zur Starttemperatur des Meßfadens vor jeder Messung verschoben worden ist, die beiden Schwellenwerte SW1 und SW2 in einem festen Abstand zur Umgebungstemperatur verschoben werden. Die sich ergebenden Zeitdauern zwischen den Schwellenwerten SW1 und SW2 sind dann bei konstanter Verschiebung derselben mit der Umgebungstemperatur in dem Fall der Pirani-Messung in einem großen Temperaturbereich unabhängig von der Umgebungstemperatur, da sich die in Fig. 2 gezeigten Temperaturanstiegsflanken bei Änderung der Umgebungstemperatur lediglich linear entlang der Temperaturachse verschieben und durch das Nachführen der Schwellenwerte SW1 und SW2 gewährleistet wird, daß die Steilheit, die durch Erfassen der Zeitdauern zwischen SW1 und SW2 bestimmt wird, immer den selben Temperaturabschnitten der Temperaturverläufe von Fig. 2 entspricht. Anders ausgedrückt, wird durch Verschieben der Schwellenwerte SW1 und SW2 ein Offset bzw. Versatz der Temperaturverläufe, der sich durch Änderung der Umgebungstemperatur (Tₛₜₐᵣₜ in Fig. 2) ergibt, ausgeglichen. Folglich ist durch Nachführung der Schwellenwerte SW1 und SW2 das in Fig. 3 gezeigte Ausführungsbeispiel bei konstant niedrigem Leistungsbedarf auch über einen großen Temperaturbereich anwendbar. Ein weiterer Vorteil des in Fig. 3 gezeigten Ausführungsbeispiels besteht darin, daß der Temperaturbereich, der sich zwischen den beiden Schwellenwerten SW1 und SW2 erstreckt, relativ zu der Umgebungstemperatur versetzt ist, so daß die Abfall- bzw. Abkühlzeiten des Meßfadens, um den nächsten Meßzyklus beginnen zu können, kürzer sind.

Wenn eine hohe Meßfrequenz erforderlich ist, kann nach einer oder beispielsweise nach drei gemittelten Messungen der Energie-Impuls bis zur nächsten Messung nach einem festen Zeitraster ausgesetzt werden, wodurch sich eine weitere Gesamt-Leistungs-Verminderung ergibt.

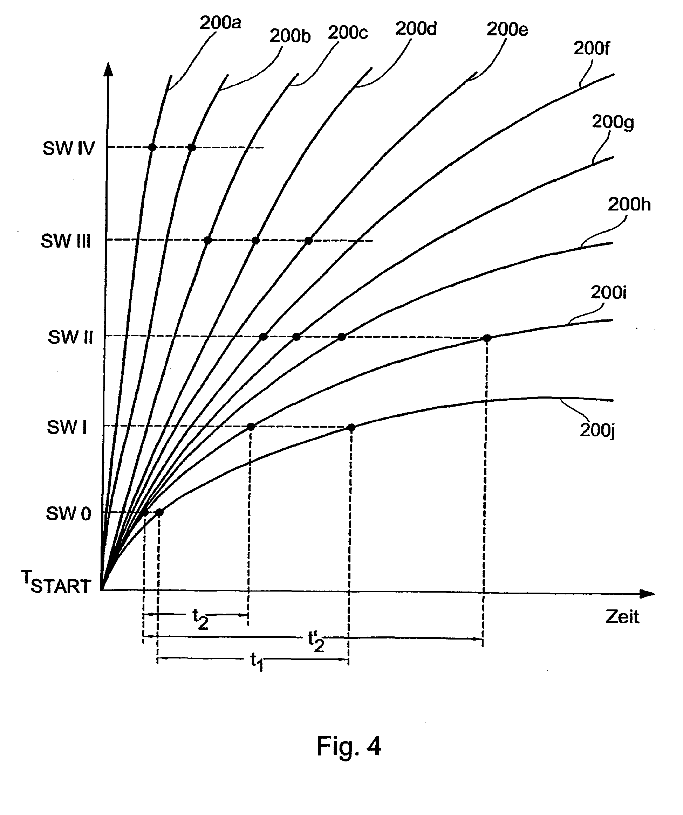

Bezugnehmend auf Fig. 4 wird ein weiteres Ausführungsbeispiel beschrieben, bei dem durch Vorsehen mehrerer Schwellenwerte die Einstellbarkeit des Zeitdauermeßbereichs erzielt wird. Fig. 4 zeigt einen Graphen, bei dem die Temperatur über die Zeit in willkürlichen Einheiten aufgetragen ist. Neben der Starttemperatur Tₛₜₐᵣₜ, die wiederum der Umgebungstemperatur entsprechen soll, und einem Schwellenwert SW0, der dem Schwellenwert SW1 von Fig. 2 und 3 entspricht, sind in Fig. 4 entlang der Temperaturachse vier weitere Schwellenwerte SWI, SWII, SWIII bzw. SWIV angezeigt, von denen in dem vorliegenden Fall alle äquidistant voneinander beabstandet sind.

In Fig. 4 sind mehrere Temperaturanstiegsflanken 200a - 200j gezeigt, die verschiedenen Drücken entsprechen und sich beim Anlegen eines bestimmten konstanten Stroms ergeben. Wie bei dem in Fig. 3 gezeigten Ausführungsbeispiel wird durch Anlegen eines konstanten Stroms zunächst begonnen, den Meßfaden aufzuheizen, wobei eine Zeitmessung eingeschaltet wird, wenn der Temperaturverlauf 200a - 200j den Schwellenwert SW0 überschreitet. Anders als bei dem in Fig. 3 gezeigten Ausführungsbeispiel wird die Zeitmessung jedoch nicht bei Erreichen eines bestimmten Schwellenwerts gestoppt, sondern vielmehr wird unter den Schwellenwerten SWI - SWIV ein Schwellenwert zum Beenden der Zeitmessung derart ausgesucht, daß eine sich ergebende Zeitdifferenz bzw. Zeitdauer ausreichend groß ist.

In Fig. 4 sind beispielsweise exemplarisch die Zeitdauern t₁ und t₂ für die Temperaturverläufe 200i und 200j, die den höchsten Drücken entsprechen, gezeigt, die sich beim Beenden der Zeitmessung bei Erreichen des Schwellenwerts SWI ergeben. Wie es ersichtlich ist, reduziert sich die Zeitdauer mit abnehmendem Druck (t₂ < t₁), wobei die sich ergebenden Zeitdauern derart kurz werden können, daß dieselben eine bestimmte erfaßbare Minimalzeitdauer, die beispielsweise von einer bestimmten Abtastfrequenz zur Abtastung der Temperaturverläufe abhängt, unterschritten wird. In dem Fall, daß beispielsweise die Zeitdauer t₂ kleiner als eine. Minimalzeitdauer ist, wird der Meßfaden über den Schwellenwert SWI hinaus weiter aufgeheizt, bis die Temperatur des Meßfadens den Schwellenwert SWII erreicht hat, wobei sich hieraus eine Zeitdauer t₂' ergibt. An dieser Stelle kann die Aufheizung des Meßfadens sowie die Zeitmessung gestoppt werden, da die gemessene Zeitdauer nun groß genug ist. Bei dem bezüglich Fig. 4 beschriebenen Ausführungsbeispiel ist es ferner möglich, daß die Aufheizung des Meßfadens fortgesetzt wird, um beispielsweise die Meßgenauigkeit bei gleichzeitiger Reduzierung der Meßfrequenz zu erhöhen. Folglich ermöglicht das Ausführungsbeispiel von Fig. 4 durch das Vorsehen mehrerer Schwellenwerte die Einstellbarkeit verschiedener Meßbereiche, wie z. B. die Erfassung höherer Drücke, unter Berücksichtigung der Erfaßbarkeit von Zeitdauern größer einer bestimmten Mindestzeitdauer. Natürlich ist auch das bezugnehmend auf Fig. 4 erörterte Ausführungsbeispiel mit der Verschiebung der Schwellenwerte SW0 - SWIV in einem festen Abstand zur Umgebungstemperatur, wie es im vorhergehenden beschrieben wurde, verknüpfbar.

Nachdem bezugnehmend auf Fig. 2 - 4 das Meßprinzip sowie verschiedene Ausführungsbeispiele beschrieben worden sind, die verschiedene Möglichkeiten zur Zeiterfassung betrafen, wird im folgenden kurz beschrieben, wie basierend auf der erfaßten Zeitdauer auf den physikalischen Parameter oder auch auf andere Meßgrößen, wie z. B. einen Gasfüllstand, rückgeschlossen werden kann. Wie es bereits bezugnehmend auf Fig. 2 beschrieben worden ist, kann zur Bestimmung des physikalischen Parameters entweder ein theoretisch hergeleiteter Zusammenhang oder eine experimentelle Meßreihe verwendet werden. Vorzugsweise werden experimentelle Messungen verwendet, um eine Nachschlagtabelle zu erzeugen. Die experimentellen Messungen ergeben beispielsweise für eine spezielle Startumgebungstemperatur T_{Start} in den Ausführungsbeispielen, die bezugnehmend auf Fig. 2 und 3 beschrieben worden sind, zu jedem physikalischen Parameter eine Zeitdauer, und in dem Fall des Ausführungsbeispiels, das bezugnehmend auf Fig. 4 beschrieben worden ist, mehrere Zeitdauern.

Bei Anwendung auf das Pirani-Prinzip, wie es im vorhergehenden beschrieben wurde, wird in dem erstgenannten Fall beispielsweise eine Nachschlagtabelle erzeugt, in der bestimmten Drücken bestimmte Zeitdauern zugeordnet sind. Zur Bestimmung des physikalischen Parameters aus der erfaßten Zeitdauer wird folglich unter Verwendung derselben auf die Nachschlagtabelle zugegriffen, um einen Druckausgangswert zu erhalten. Dadurch, daß die Schwellenwerte SW 1 und SW 2 (Fig. 3) in einem festen Abstand zur Umgebungstemperatur verschoben werden, bzw. der Schwellenwert SW (Fig. 2) in einem festen Abstand zur Starttemperatur des Meßfadens zu Beginn eines Aufheizvorganges eingestellt wird, wird gewährleistet, daß der Zugriff auf die Nachschlagtabelle anhand der erfaßten Zeitdauer eine korrekte Bestimmung des zu erfassenden physikalischen Parameters ergibt. In dem Fall des Ausführungsbeispiels von Fig. 4 wird auf die Nachschlagtabelle unter Verwendung der erfaßten Zeitdauer sowie unter Angabe des Schwellenwerts, bei dessen Erreichen die Zeitdauermessung gestoppt wurde, zugegriffen.

In dem Fall, daß, anders als im vorhergehenden beschrieben, eine Veränderung der Umgebungstemperatur nicht nur eine lineare Verschiebung der Ausgangssignalverläufe entlang der Temperaturachse ergibt, kann diese Abhängigkeit der Ausgangssignalflanke von der Umgebungstemperatur als einem auf das Ausgangssignal des Meßfadens Einfluß nehmenden Parameter entweder durch Berücksichtigung eines von der Umgebungstemperatur abhängigen Korrekturwerts oder durch experimentelles Messen und Erstellen von mehreren Nachschlagtabellen für mehrere Umgebungstemperaturen ausgeglichen werden. Auf ähnliche Weise kann in dem Fall, daß, anders als im vorhergehenden beschrieben, die Änderung der Ausgangssignalverläufe nicht linear und somit die Zeitdauer nicht unabhängig von der Starttemperatur des Meßfadens ist, diese Abhängigkeit von der Starttemperatur entweder durch einen Korrekturwert oder durch experimentelles Messen und Erstellen von mehreren Nachschlagtabellen für mehrere Starttemperaturen ausgeglichen werden.

Bei einem Ausführungsbeispiel empfängt eine Auswerteeinrichtung, die entweder eine entsprechende Nachschlagtabelle oder einen programmierten funktionellen Zusammenhang in gespeicherter Form aufweist, das Signal 40 (Fig. 1) von der Zeitmeßschaltung und bestimmt unter Verwendung des Signals 40, das zusätzlich zu der erfaßten Zeitdauer die Angabe des verwendeten Endschwellenwerts (SWI - SWIV), die Starttemperatur des Meßfadens oder die Umgebungstemperatur aufweisen kann, und damit den physikalischen Parameter indirekt anzeigt, oder das den physikalischen Parameter direkt anzeigt, eine aus dem physikalischen Parameter bestimmbare Meßgröße, wobei sich aus einer solchen Kombination des Sensors und der Auswerteeinrichtung ein Sensor zur Erfassung der Meßgröße ergibt, wie z. B. des Gasfüllstands eines Behälters. Folglich werden hierzu entweder eine Abhängigkeit zwischen dem direkt angegebenen physikalischen Parameter und der Meßgröße oder zwischen der von dem Sensor empfangenen Zeitdauer und der Meßgröße verwendet.

Bevor im folgenden technische Realisierungen gemäß verschiedener Ausführungsbeispielen beschrieben werden, wird darauf hingewiesen, daß, obwohl im vorhergehenden bezugnehmend auf Fig. 2 - 4 das Ausgangsignal die Temperatur des Meßfadens war, das Ausgangssignal ferner eine über den Meßfaden bzw. die Meßstrecke, wie z.B. eine Elektrodenanordnung, abfallende Spannung, ein durch denselben fließender Strom oder der temperaturabhängige Widerstand desselben sein kann. Die vorhergehende Beschreibung trifft auch in diesen Fällen zu, wenn entlang der y-Achse anstatt der Temperatur des Meßfadens die Spannung, der Strom bzw. der Widerstand aufgetragen werden, indem die Meßfadentemperaturabhängigkeit dieser Ausgangssignalgrößen verwendet wird. Die Umgebungstemperatur nimmt als ein zusätzlicher physikalischer Parameter neben dem Druck auch auf diese Ausgangssignalgrößen Einfluß. Zudem trifft die vorhergehende Beschreibung gleichermaßen auf die Wärmeleitfähigkeit der Umgebung des Meßdrahts zu, da diese ebenfalls auf die Wärmeabfuhr von dem Meßdraht Einfluß hat, und in dem Fall von Gas direkt mit dem Druck zusammenhängt.

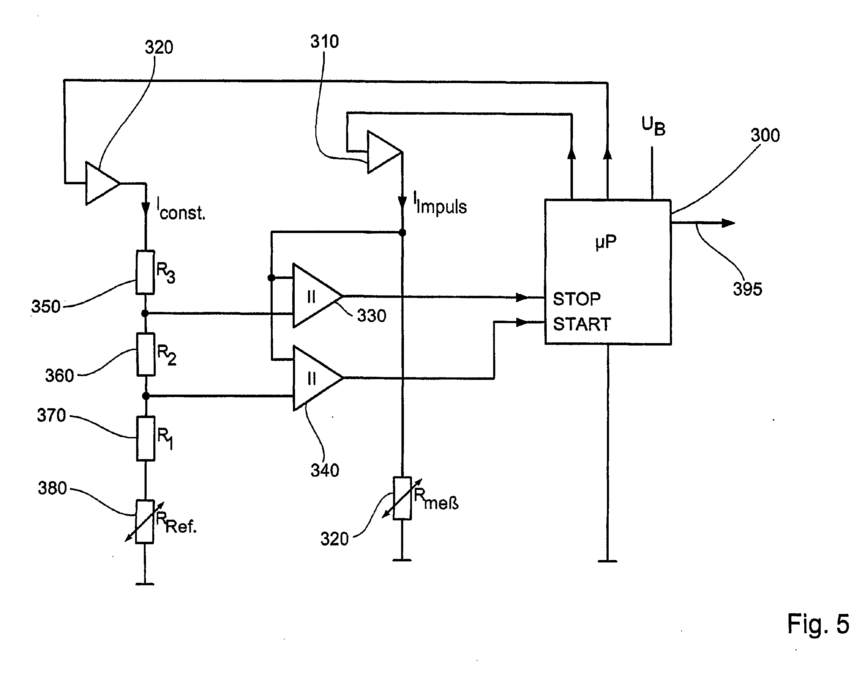

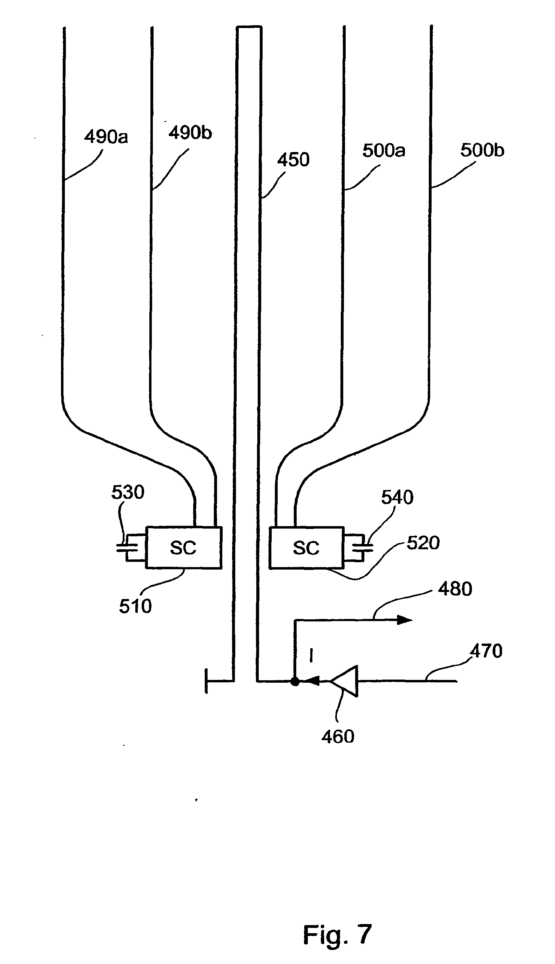

Im folgenden wird nun bezugnehmend auf Fig. 5 ein spezielles Ausführungsbeispiel für eine Meßschaltung beschrieben, die geeignet ist, um einen Meßfaden mit definiertem Stromimpuls anzusteuern und anhand der Widerstandsänderung des Meßfadens in Abhängigkeit von der Temperatur die Zeitdauererfassung durchzuführen. Insbesondere verwendet die Meßschaltung von Fig. 5 einen zusätzlichen Referenzmeßfaden, der zu dem eigentlichen Meßfaden baugleich ist, und dessen Temperatur immer gleich der Umgebungstemperatur ist, um die zur Zeitdauererfassung gemäß dem bezugnehmend auf Fig. 3 gezeigten Ausführungsbeispiel verwendeten Schwellenwerte in einem festen Abstand zur Umgebungstemperatur zu verschieben.

Die Schaltung von Fig. 5 umfaßt einen Mikroprozessor 300, zwei Verstärker 310 und 320, zwei Komparatoren 330 und 340 sowie drei Widerstände 350, 360 und 370. Der Mikroprozessor wird von einer Versorgungsspannung U_{B} versorgt und gibt an die zwei Verstärker 310 und 320 Spannungssignale aus, um an den Ausgängen der Verstärker einen Strom Iₖₒₙₛₜ bzw. I_{Impuls} zu erzeugen. Zwischen den Ausgang des Verstärkers 320 und Masse sind die drei Widerstände 350 - 370 und der temperaturabhängige Widerstand 380 des Referenzmeßfadens in Reihe geschaltet. Zwischen den Ausgang des Verstärkers 310 und Masse ist lediglich der temperaturabhängige Widerstand 390 des Meßfadens geschaltet. Ein erster Eingang des Komparators 330 ist mit einem Knoten zwischen den Widerständen 350 und 360 verbunden, während ein erster Eingang des Komparators 340 mit einem Knoten zwischen den Widerständen 360 und 370 verbunden ist. Die zweiten Eingänge der Komparatoren 330 und 340 sind mit dem Ausgang des Verstärkers 310 verbunden. Die Ausgänge der Komparatoren 330 und 340 sind mit zwei Eingängen des Mikroprozessors 300 verbunden, wobei der Mikroprozessor 300 an einem Ausgang 395 ein pulsweitenmoduliertes Ausgangssignal ausgibt, dessen Impulsweite von der erfaßten Zeitdauer abhängt und den Druck oder eine andere durch den Druck bestimmbare Meßgröße, wie z. B. einen Füllstand eines Flüssigkeitstanks, angibt.

Nachdem im vorhergehenden der Schaltungsaufbau beschrieben worden ist, wird im folgenden die Funktionsweise der Schaltung von Fig. 5 beschrieben. Durch die drei Widerstände 350 - 370 werden zusammen mit dem konstanten Strom Iₖₒₙₛₜ, der von dem Verstärker 320 erzeugt wird, Spannungen festgelegt, die einen festen Abstand zu einer Spannung aufweisen, die über den Referenzwiderstand 380 abfällt und der Umgebungstemperatur entspricht. Seien R₁, R₂ und R₃ die Widerstandswerte der Widerstände 370, 360 bzw. 350, und sei R_{ref} der Widerstandswert des Referenzfadens bei Umgebungstemperatur, so liegt insbesondere an dem ersten Eingang des Komparators 340 eine Spannung Iₖₒₙₛₜ * (R₁ + R_{ref}) an, während an dem ersten Eingang des Komparators 330 eine Spannung Iₖₒₙₛₜ * (R_{ref} + R₁ + R₂) anliegt. Hingegen fällt über den Meßwiderstand 390 mit dem temperaturabhängigen Widerstandswert R_{meß} die Spannung I_{Impuls} * R_{meß} ab, wobei während des Aufheizvorgangs I_{Impuls} = Iₖₒₙₛₜ und andernfalls I_{Impuls} = 0 gilt. Folglich liegt während eines Aufheizvorganges an dem ersten Eingang der Komparatoren 330 und 340 die Spannung Iₖₒₙₛₜ * R_{meß} an. Mit zunehmender Aufheizung des Meßfadens nimmt R_{meß} zu, bis beispielsweise an den beiden Eingängen des Komparators 340 gleiche Spannungen anliegen (R_{meß} = R_{ref} + R₁), woraufhin der Komparator 340 ein Startsignal an den Mikroprozessor 300 ausgibt. Der Strom Impuls wird jedoch weiterhin aufrecht erhalten, bis der Widerstand R_{meß} des Meßfadens den Wert R₂ + R₁ + R_{ref} erreicht hat, so daß an dem Komparator 330 zwei gleiche Eingangssignale anliegen und derselbe ein Stoppsignal an den Mikroprozessor 300 ausgibt. Der Temperaturverlauf des Meßfadens entspricht hierbei dem in Fig. 3 gezeigten, wobei der Temperaturschwellenwert SW1 dem Widerstandswert R_{ref} + R₁ und der Temperaturschwellenwert SW2 dem Widerstandswert R_{ref} + R₁ + R₂ entspricht.

Der Mikroprozessor 300 verwendet das Startsignal und das Stoppsignal, um einen pulsweiten-modulierten Impuls zu erzeugen, dessen Impulsweite von der Zeitdauer abhängt, die zwischen dem Empfang des Startsignals und dem Empfang des Stoppsignals vergeht. Nach Empfang des Stoppsignals unterbricht der Mikroprozessor 300 das Spannungssignal an den Verstärker 310 so lange, bis von dem letzten Aufheizvorgang eine vorbestimmte Meßzykluszeitdauer vergangen ist, die der Mikroprozessor 300 aus einem internen Takt bestimmt. Die Meßzykluszeitdauer ist lang genug, um es zu ermöglichen, daß sich der Meßfaden genügend abkühlen kann, und der Widerstand des Meßfadens auf unter R_{ref} + R₁ abfällt. Nach Ablauf der Meßzykluszeitdauer steigt die Temperatur des Meßfadens wieder an; bis sie der Widerstandswert des Meßfadens R_{ref} + R₁ erreicht, und der Komparator 340 wieder das Startsignal an den Mikroprozessor 300 ausgibt, woraufhin der nächste Aufheizvorgang beginnt und der Mikroprozessor 300 den Verstärker 310 ansteuert, um den Strom I_{Impuls} zu erzeugen. Bei jedem Meßzyklus gibt der Mikroprozessor 300 einen Impuls des pulsweiten-modulierten Signals 395 aus, wobei der Mikroprozessor 300 die Impulsbreite abhängig von der erfaßten Zeitdauer bestimmt. Die Impulsbreite kann beispielsweise direkt der Zeitdauer entsprechen, wobei das Signal 395 von einer geeigneten Auswerteeinrichtung verwendet werden könnte, um aus den pulsweiten-modulierten Impulsen für jeden Abtastzyklus auf bestimmte Meßgrößen rückzuschließen, die sich aus der erfaßten Zeitdauer herleiten lassen. In dem Fall, daß die Meßschaltung beispielsweise bei einem Drucksensor verwendet wird, kann der Mikroprozessor die Impulsbreite mittels einer geeigneten Auswertung derart bestimmen, daß die Impulsbreite ein Maß für den Druck ist. In dem Fall, daß die Meßschaltung beispielsweise bei einem Flüssigkeitsfüllstandssensor verwendet wird, kann die Impulsbreite ein Maß für der Füllstand sein, so daß beispielsweise das Verhältnis der Impulsbreite zu einer vollen Impulsbreite den Füllstand eines Flüssigkeitstanks anzeigt, wie z. B. eine halbe Impulsbreite für einen halbvollen Tank. Der Vorteil bei diesem Füllstandssensor besteht darin, daß der Füllstand proportional zur erfaßten Zeitdauer ist, und daß der Mikroprozessor 300 folglich nur lineare Berechnungen zur Bestimmung der Impulsbreiten durchführen muß.

Bezugnehmend auf Fig. 5 wird darauf hingewiesen, daß eine ähnliche Schaltung auch für das bezugnehmend auf Fig. 4 beschriebene Ausführungsbeispiel hergestellt werden kann, indem mehrere Komparatoren in Kombination mit geeigneten weiteren Widerständen vorgesehen werden. Der Mikroprozessor wird in diesem Fall die Auswahl eines Schwellenwerts vornehmen, bei dem die Zeitmessung gestoppt wird, und würde beispielsweise zusätzlich zu dem pulsweiten-modulierten Signal 395 ein Signal ausgeben, das den zum Stoppen der Zeitmessung ausgewählten Schwellenwert anzeigt. Falls in dem Mikroprozessor 300 eine komplexere Auswertung, wie sie im vorhergehenden beschrieben wurde, durchgeführt wird, so kann derselbe die Schwellenwertauswahl direkt zur Bestimmung der Impulsbreiten verwenden.

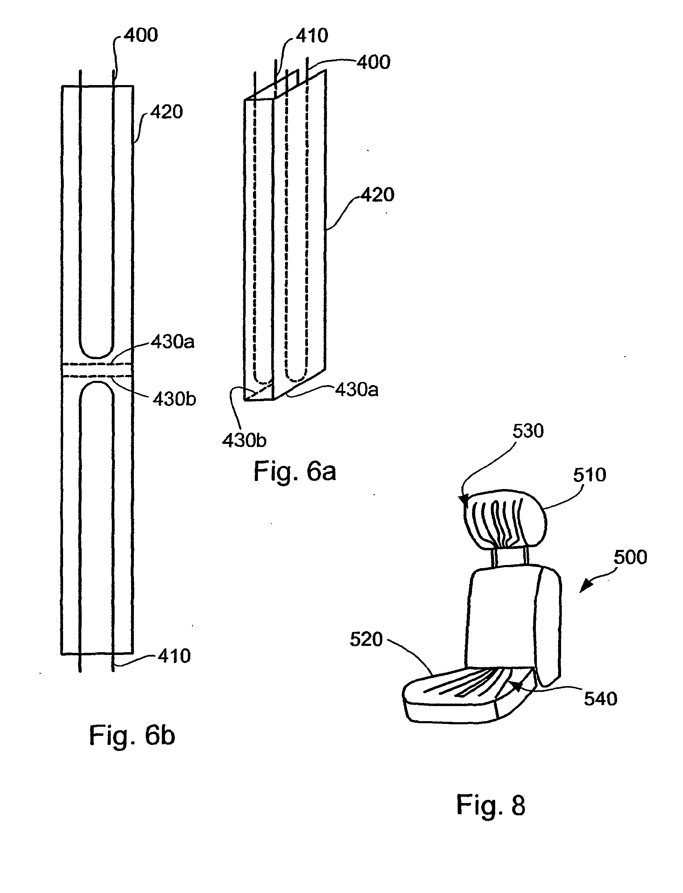

In Fig. 6a und Fig. 6b ist ein Meßfadenaufbau gemäß einem Ausführungsbeispiel gezeigt, bei dem ein Referenzfaden bzw. -draht 400 und ein Meßfaden bzw. -draht 410, wie sie bei der Meßschaltung von Fig. 5 verwendet werden, in Form einer Schleife in oder auf eine Folie 420, wie z. B. eine PP-Folie, ein- bzw. auflaminiert sind, wobei derselbe zusammen mit der in Fig. 5 gezeigten Meßschaltung zur Füllstandsmessung oder Ölqualitätsmessung vorgesehen ist. Wie es in Fig. 6b ersichtlich ist, sind in der Folie 420 zwei Knickstellen 430a und 430b vorgesehen, so daß die Folie 420 derart geknickt werden kann, daß die Widerstandsdrahtschleifen 400 und 410 parallel nebeneinander verlaufen, wie es in Fig. 6a gezeigt ist. Der Aufbau kann beispielsweise auch aus aufgedruckten oder Dünnfilm-Bahnen bestehen, wobei als Träger auch Hohlkörper, Rohre, Profile usw. dienen können.

Zur Füllstandsmessung wird der Sensoraufbau in der zusammengeklappten Form, wie sie in Fig. 6a gezeigt ist, in vertikaler Richtung in einen Tank gehalten. Je nach Füllstand des Tanks ist der Meßdraht 410 verschieden tief in die Füllflüssigkeit, wie z. B. Öl, eingetaucht. Je nach Eintauchtiefe des Meßdrahts 400 ändert sich die Wärmeleitfähigkeit der Umgebung des Meßdrahts 400 und somit die Wärmeabfuhr bei Anlegen eines konstanten Stroms, so daß, ähnlich wie bei dem Pirani-Prinzip in Bezug auf den Druck, der Ausgangssignalverlauf und insbesondere die Steilheit desselben von dem Füllstand des Tanks abhängt. Bei einem vollen Tank und somit einer hohen Wärmeleitfähigkeit der Umgebung des Meßdrahts 400 nimmt die Temperatur des Meßdrahts weniger schnell zu als bei einem leeren Tank. Dementsprechend ist die Steilheit der Aufwärmflanke bzw. die erfindungsgemäß erfaßte Zeitdauer ein Maß für die Wärmeleitfähigkeit der Umgebung und somit des Füllstands eines Tanks. Wird der Sensoraufbau von Fig. 6a und 6b folglich beispielsweise zusammen mit der Schaltung von Fig. 5 verwendet, wird ein Sensor erhalten, der in der Lage ist, ein Signal zu erzeugen, das den Füllstand eines Tanks anzeigt. Da die Wärmeleitfähigkeit einer Flüssigkeit, wie z. B. Öl, ferner von dem Verschmutzungsgrad bzw. der Qualität, wie z. B. der Menge an Oxidationsstoffen, abhängt, kann man mit einer vollständig eingetauchten Meßdrahtanordnung, wie z.B. einem Meßdraht oder einer Widerstandsdrahtanordnung, und einer Meßschaltung wie in Fig. 5 einen Sensor erhalten, der in der Lage ist, ein Signal zu erzeugen,'das die Qualität einer Flüssigkeit, wie z. B. die Ölqualität, anzeigt

Bezugnehmend auf die Fig. 7 bis 11 werden im folgenden Ausführungsbeispiele beschrieben, bei denen ein Sensor zusammen mit einem kapazitiven Sensor verwendet wird, wie er beispielsweise in den Dokumenten DE-19645970, EP0824671 und DE-19516809 beschrieben ist, welche hiermit unter Bezugnahme aufgenommen werden. Der grundsätzliche Aufbau eines solchen kombinierten Sensors ist in Fig. 7 gezeigt. Fig. 7 zeigt für den Teil des Sensors eine Meßdrahtschleife 450 als resistives Sensorelement, die zwischen Masse und den Ausgang eines Verstärkers 460 geschaltet ist, der während des Aufheizens einen konstanten Strom I erzeugt, wie es im vorhergehenden beschrieben worden ist. Über einen Eingang 470 wird der Verstärker 460 gesteuert, während an dem Ausgang des Verstärkers 460 an einer Leitung 480 die Spannung abgegriffen werden kann, welche über den Meßdraht 450 abfällt. Der Verstärker 460 und die Meßdrahtschleife 450 entsprechen hierbei dem Verstärker 310 und dem Widerstand 390 von Fig. 5, wobei der restliche Teil der Schaltung von Fig. 5 in Fig. 7 zum einfacheren Verständnis weggelassen wurde.

Der kapazitive Sensorteil umfaßt zwei Paare von Meßdrähten 490a und 490b bzw. 500a und 500b, welche ein offenes Ende aufweisen und mit dem anderen Ende jeweils mit einer Switched-Capacitor-Meßschaltung 510 und 520 verbunden sind. Mit den SC-Meßschaltungen 510 und 520 sind zwei Referenzkondensatoren 530 bzw. 540 verbunden. Bezüglich eines Beispiels für eine SC-Meßschaltung wird auf die internationale Patentanmeldung WO92/18856 verwiesen, deren Offenbarungsgehalt durch diesen Querverweis aufgenommen wird. Die Aufgabe der SC-Meßschaltungen 510 und 520 besteht darin, die sich veränderte Kapazität zwischen den Meßdrahtpaaren 490a, 490b, 500a und 500b zu erfassen, um daraus auf Größen rückschließen zu können, die auf die Dielektrizitätskonstante zwischen den Drähten Einfluß nehmen.

Der kombinierte Sensor von Fig. 7 kann beispielsweise in einem Autositz eingebaut sein, wie es in Fig. 8 gezeigt ist. Fig. 8 zeigt einen Autositz, in dessen vordere Seite der Kopfstütze 510 und in dessen Sitzfläche 520 zwei Sensoren der in Fig. 7 gezeigten Art 530 und 540 angeordnet sind. Durch diese beiden eingebauten Sensoren 530 und 540 ist es aufgrund einer Änderung der Wärmeleitfähigkeit der Umgebung des Meßfadens und einer Änderung der Dielektrizitätskonstante zwischen den Meßdrähten eines Meßdrahtpaares, wie sie in Fig. 7 gezeigt sind, möglich, auf Einflüsse rückzuschließen, die diese Änderungen hervorrufen, wie z. B. auf die Sitzplatzbelegung oder die Kopfstützenposition, so daß gemäß einem Ausführungsbeispiel ein Sensor zur redundanten Sitzbelegungserkennung und Erkennung der Kopfstützenposition durch einen Sensor wie in Fig. 7 erhalten werden kann.

Der Meßfaden und die Meßdrahtpaare könnten ähnlich wie bei dem Ausführungsbeispiel von Fig. 6a und 6b in bzw. auf einer Folie ein- bzw. auflaminiert sein, so daß dieselben bei Herstellung des Autositzes 500 einfach dadurch eingebaut werden könnten, daß die Folien unterhalb des Stoffbezugs eingenäht werden. Für die Drähte könnte beispielsweise ein dünner Kupferlackdraht verwendet werden.

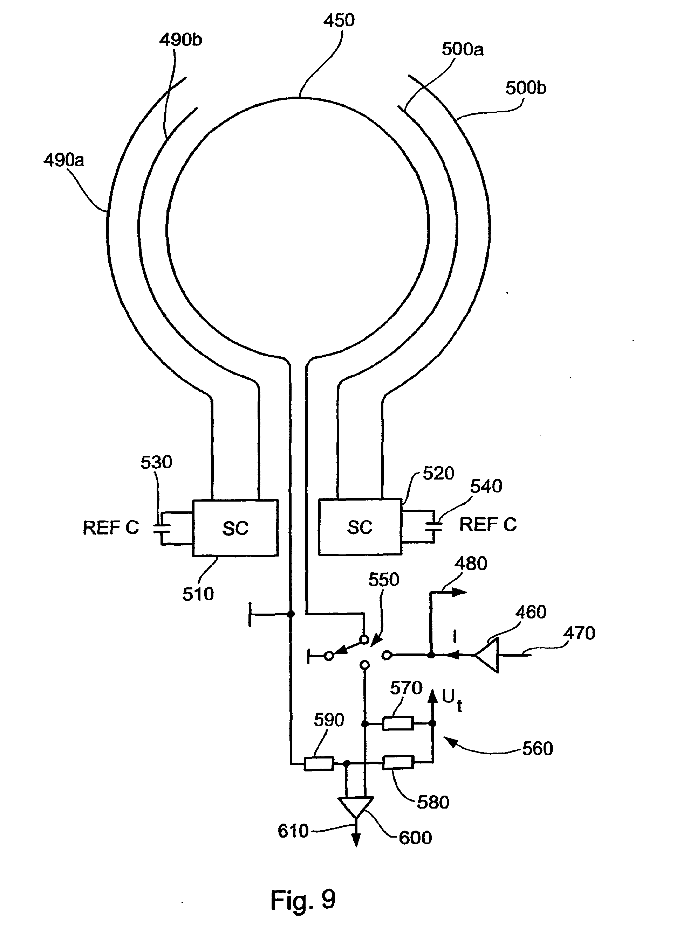

In Fig. 9 ist ein Ausführungsbeispiel gezeigt, bei dem ein Sensor zusammen mit einem kapazitiven Sensor, wie er bereits bezugnehmend auf Fig. 7 erläutert worden ist, zur redundanten Topferkennung für Glasherdplatten, wie z. B. Ceran- (eingetragenes Warenzeichen) Kochfelder, verwendet wird. Bezugnehmend auf Fig. 9 wird darauf hingewiesen, daß funktionsgleiche Elemente wie diejenigen bei Fig. 7 mit den selben Bezugszeichen versehen sind und folglich nicht nochmals erörtert werden.

Wie in Fig. 7 sind auch in Fig. 9 die Meßdrahtpaare 490a und 490b bzw. 500a und 500b, die SC-Meßschaltungen 510, 520 und die Referenzkondensatoren 530 und 540 gezeigt, die den kapazitiven Sensorteil bilden. Anders als bei dem Ausführungsbeispiel von Fig. 7 sind der Meßfaden 450 und die Meßdrahtpaare 490a, 490b und 500a, 500b entsprechend der Form einer Kochplatte kreisförmig gebildet. Anders als bei dem Ausführungsbeispiel von Fig. 7 umfaßt der Sensor von Fig. 9 einen Schalter 550, durch welchen der Meßfaden 450 entweder vollständig auf Masse gelegt, mit einem Temperaturerfassungsschaltungsteil 560 oder mit einem Temperatur- bzw. Spannungsanstiegsschaltungsteil (nicht gezeigt), wie z. B. demjenigen von Fig. 5, verbunden werden kann.

In der Stellung des Schalters 550, die in Fig. 9 gezeigt ist, sind beide Enden des Meßfadens 450 auf Masse geschaltet. In einer zweiten Stellung ist der Meßfaden 450 mit dem Temperaturmeßschaltungsteil 560 verbunden, der aus drei Widerständen 570, 580 und 590 sowie einem Differenzverstärker 600 besteht. Die Widerstände 570 und 580 weisen den selben Widerstandswert auf und sind mit einem Ende mit einer Versorgungsspannung U₊ verbunden. Das andere Ende des Widerstands 570 ist mit dem Schalterkontakt der zweiten Stellung des Schalters 550 und einem ersten Eingang des Differenzverstärkers 600 verbunden. Das andere Ende des Widerstands 580 ist mit dem anderen Eingang des Differenzverstärkers 600 verbunden und über den Widerstand 590 auf Masse geschaltet. Befindet sich der Schalter 550 in der zweiten Stellung, so gibt der Differenzverstärker 600 ein Signal aus, das der Differenz der beiden Eingangsspannungen an den beiden Eingängen entspricht, wobei sich die Differenz aus dem sich verändernden Widerstandswertunterschied zwischen dem Widerstandswert des Widerstands 590 und dem Widerstandswert des Meßfadens 450 bzw. aus den sich ändernden abfallenden Spannungen ergibt. Da der Widerstandswert des Meßfadens wiederum von der Temperatur abhängt, ist das Differenzsignal, das an dem Ausgang 610 des Differenzverstärkers 600 anliegt, wiederum ein Maß für die Temperatur.

In einer dritten Stellung ist der Meßfaden 450, wie bei dem Aufbau von Fig. 7, mit dem Ausgang eines Verstärkers 460 verbunden, der durch einen Eingang 470 gesteuert wird, und an dessen Ausgang das Spannungsanstiegssignal an einer Leitung 480 erfaßt werden kann.

Wenn der Sensor von Fig. 9 zur Topferkennung verwendet wird, wobei derselbe beispielsweise in das Ceran- (eingetragenes Warenzeichen) Kochfeld integriert ist, kann durch den Sensorteil die Änderung der Wärmeleitfähigkeit der Umgebung des Meßfadens erfaßt werden, die sich durch Abstellen eines Topfes auf bzw. Wegnehmen eines Topfes von einer Herdplatte ergibt. Redundant würden die SC-Meßschaltungen 510 und 520 eine sich durch eine Änderung des Belegungszustands der Herdplatte ergebende Änderung der Dielektrizitätskonstante zwischen den Meßdrahtpaaren erfassen.

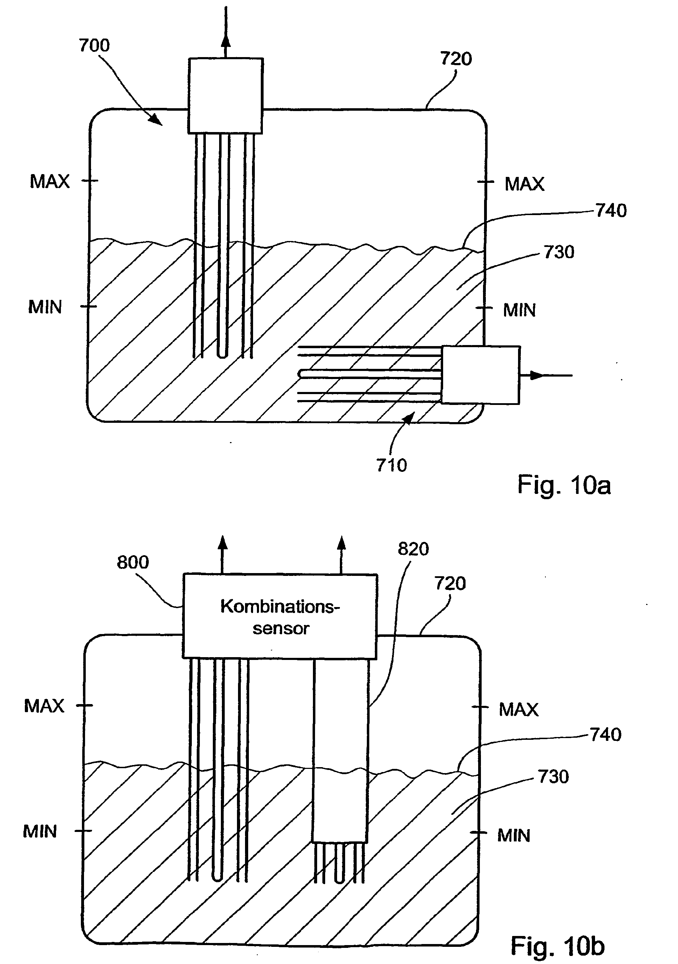

Bezugnehmend auf Fig. 10a und 10b werden im folgenden Ausführungsbeispiele beschrieben, bei denen ein Sensor und ein kapazitiver Sensor, wie er bereits bezugnehmend auf Fig. 7 beschrieben worden ist, zu einem Sensor zur Erfassung eines Ölstands in einem Tank oder Behälter, wie z.B. einem Motorgehäuse, und der Ölqualitätserfassung verwendet werden.

Fig. 10a zeigt sehr vereinfacht einen ersten Sensor 700 und einen zweiten Sensor 710, die beide einen kapazitiven Sensorteil und einen Sensorteil aufweisen. Die Sensordrahtpaare und der Meßfaden des Sensors 700 erstrecken sich vertikal in einem Tank 720, in dem sich Öl 730 befindet, dessen Füllstand mit 740 angezeigt ist. Folglich erstrecken sich die Meßdraht- bzw. Widerstandsbahnpaare und der Meßfaden des Sensors 700 je nach Füllstand 740 teilweise in das Öl 730, wobei der Füllstand 740 zwischen einem maximalen Füllstand und einem minimalen Füllstand schwanken kann. Je nach Füllstand ändert sich einerseits die Gesamtwärmeleitfähigkeit der Umgebung des Meßfadens und andererseits die Gesamtdielektrizitätskonstante zwischen den Drähten eines Meßdrahtpaares, so daß die Füllstandserfassung auf eine Zeitdauererfassung rückgeführt werden kann, und daß zusätzlich die Füllstandserfassung auf eine Änderung der Dielektrizitätskonstante zwischen den Drähten eines Meßdrahtpaares rückgeführt werden kann. An dem Ausgang des Sensors 700 wird folglich ein den Füllstand 740 des Tanks 720 angebendes Signal ausgegeben.

Der zweite Sensor 710 erstreckt sich waagrecht derart innerhalb des Tanks 720, daß sich die Meßdraht- oder Widerstandsdrahtpaare und der Meßfaden auch bei minimaler Befüllung bzw. minimalem Füllstand vollständig in dem Öl 730 befinden. Der Sensor 710 erfaßt neben der Temperatur, wie z. B. durch eine Temperaturmeßschaltung, wie sie in Fig. 9 gezeigt ist (560), die Ölqualität. Hierbei wird ausgenutzt, daß sich in dem Öl mit zunehmendem Alter Stoffe, wie z. B. Oxidationsprodukte, bilden, die Einfluß auf die Dielektrizitätskonstante sowie die Wärmeleitfähigkeit nehmen. Die Änderung der Wärmeleitfähigkeit sowie der Dielektrizitätskonstante können, wie im vorhergehenden beschrieben, erfaßt werden, so daß die Sensoren 700 und 710 zusammen Signale ausgeben, die den Füllstand, die Ölqualität und die Temperatur anzeigen.

Fig. 10b zeigt ein zu Fig. 10a alternatives Ausführungsbeispiel, bei dem ein Sensor zur Ölstandserfassung und ein Sensor zur Ölqualitätserfassung zu einem Kombinationssensor 800 zusammengefaßt ist. Der die Ölstandserfassung betreffende Teil des Kombinationssensors 800 umfaßt, wie der Sensor 700 von Fig. 10a, Sensordrahtpaare und einen Meßfaden, die sich vertikal in einem Tank 810 erstrecken, während ein die Ölqualitätserfassung betreffender Teil des Kombinationssensors 800 ein Trageteil 820 aufweist, der sich von dem Kombinationssensor 800 in vertikaler Richtung so weit nach unten in den Tank 810 erstreckt, daß die an dem distalen Ende des Trageteils 820 angebrachten Meßdrahtpaare und der Meßfaden, die zur Ölqualitätserfassung verwendet werden, auch bei minimaler Befüllung bzw. minimalem Füllstand vollständig mit Öl benetzt sind. Der Kombinationssensor gibt die selben Signale aus wie die beiden getrennten Sensoren von Fig. 10a.

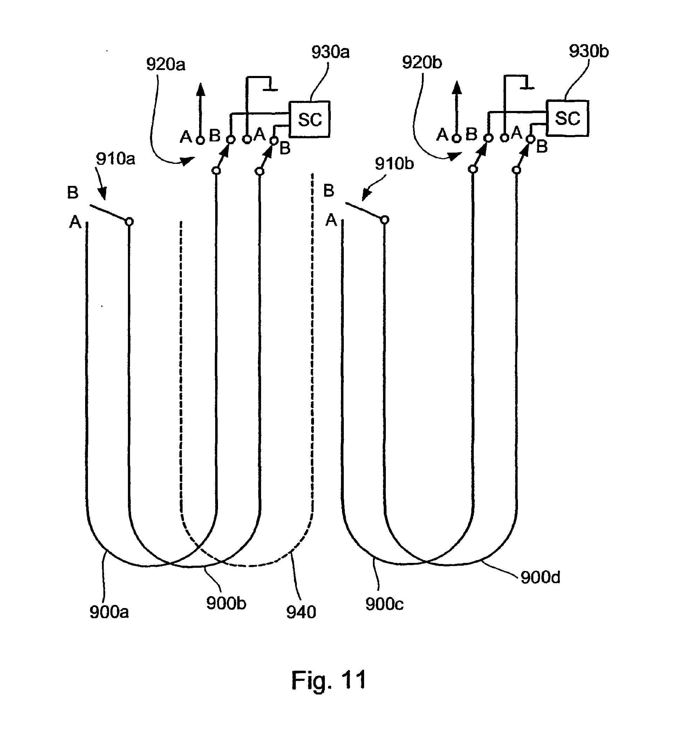

In Fig. 11 ist ein Ausführungsbeispiel schematisch gezeigt, bei dem vier Drähte 900a, 900b, 900c und 900d entweder zur kapazitiven Sensormessung oder zur Wärmeleitfähigkeitsmessung, wie sie im vorhergehenden beschrieben worden ist, verwendet werden. Zum Umschalten der Drähte in einen Zustand, bei denen dieselben zur kapazitiven Messung verwendet werden, oder in einen Zustand, bei denen dieselben zur Wärmeleitfähigkeitsmessung verwendet werden, sind zwei einfache Schalter 910a und 910b sowie zwei Doppelschalter 920a und 920b vorgesehen. Die einfachen Schalter 910b sind mit jeweils einem Ende der Meßdrähte 900a und 900b bzw. 900c und 900d verbunden, um aus denselben in einem geschlossenen Zustand zwei Meßdrahtschleifen zu bilden. Das andere Ende der Drähte 900a und 900b ist mit dem Doppelschalter 920a verbunden, der die beiden Enden entweder zur Wärmeleitfähigkeitserfassung mit einer Schaltung, wie sie in Fig. 5 oder 9 gezeigt ist, verbindet, oder dieselben zur kapazitiven Messung mit einer SC-Meßschaltung 930 verbindet. Dementsprechend ist der Doppelschalter 920b mit dem anderen Ende der Drähte 900c und 900d verbunden, um dieselben entweder mit einer Schaltung, wie sie in Fig. 5 oder 9 gezeigt ist, oder mit einer SC-Meßschaltung 930b zu verbinden.

In Fig. 11 ist der Zustand dargestellt, bei dem sich die Schalter 910a, 910b, 920a und 920b in einer Stellung B befinden, die der Kapazitätsmessung entspricht und bei der die Schalter 910a und 910b offen sind, so daß ein Ende der Drähte 900a - 900d offen ist. Die Stellung A entspricht der Wärmeleitfähigkeitsmessung, wobei in der Stellung A die Schalter 910a und 910b geschlossen sind, so daß sich aus den Drähten 900a und 900b bzw. 900c und 900d zwei Schleifen bilden. Wie es mit 940 angezeigt ist, kann ein zusätzlicher auf Masse geschalteter Draht vorgesehen sein, um die beiden Meßdrahtpaare 900a und 900b bzw. 900c und 900d voneinander zu entkoppeln. Wie in der Druckschrift DE-19516809 beschrieben, können die Meßdrähte in einem Flachbandkabel gebildet sein, das die fünf Drähte 900a - 900d und 940 umfaßt. Unter einer geeigneten Biegung des Flachbandkabels kann dasselbe in einem Tank angeordnet werden, um, wie bezugnehmend auf Fig. 10a und Fig. 10b beschrieben, als Füllstandssensor zu dienen.

Nachdem im vorhergehenden die vorliegende Erfindung detailliert beschrieben worden ist, wird auf folgendes hingewiesen. Obwohl die vorliegende Erfindung im vorhergehenden lediglich in Verbindung mit Aufheizvorgängen bzw. in Verbindung mit Widerstandsdrähten zur Messung der Wärmeleitfähigkeit der Umgebung oder anderer mit der Wärmeleitfähigkeit in Zusammenhang stehenden Meßgrößen, wie z. B. dem Füllstand eines Tanks, beschrieben worden ist, ist die vorliegende Erfindung auch bei anderen Vorgängen, wie z. B. Aufladevorgängen, anwendbar. Das Sensorelement könnte beispielsweise ein kapazitives Element sein, wie z. B. ein Meßdrahtpaar, zwischen dessen Drähten sich beispielsweise aufgrund eines sich ändernden Flüssigkeitsfüllstands die Dielektrizitätskonstante ändert. Beim Anlegen einer bestimmten Spannung stellt sich abhängig von der Dielektrizitätskonstante in einem eingeschwungenen Zustand eine unterschiedliche Kondensatorladung ein. Ein solcher Aufladevorgang könnte beispielsweise den Aufheizvorgängen von Fig. 2 entsprechen, so daß die erfindungsgemäß erfaßte Zeitdauer ein Maß für die Steilheit der Aufladungsflanke, und damit der Dielektrizitätskonstante zwischen den Meßdrähten und somit letztendlich des Füllstands wäre. Als Ansteuereinrichtung könnte in diesem Fall eine Konstantstromquelle verwendet werden, die eine Aufladung über zumindest zwei Schwellen hinweg und damit ein Zeitsignal als Maß für die Kapazität bewirkt. Nach einem Ladevorgang kann in einem weiteren Zyklus durch Umschalten eines Schalters auf Massepotential die Anordnung wieder entladen werden.

Die letztgenannte Messung der Kapazität durch Erfassen der Zeitdauer bei Aufladevorgängen kann auch alternativ zu der SC-Schaltung zur Auswertung der Kapazitätsänderungen bei den diversen Ausführungsbeispielen in Fig. 7-11 verwendet werden. Ein kleiner Konstantstrom lädt den zu messenden Kondensator von einer ersten bis zu einer zweiten (oder weiteren) Schwelle auf, wobei der zeitliche Abstand zwischen dem Durchlaufen der beiden Schwellen ein Maß für die Kapazität ist. In einem weiteren Takt wird der Kondensator, der beispielsweise aus den Meßdrähten besteht, gegen Masse entladen. Ein weiteres Alternatives Ausführungsbeispiel zur Auswertung der Kapazitätsänderung sieht als Auswerteeinrichtung einen TDC-Wandler (TDC = Time to Digital Converter = Zeit/Digital-Wandler) vor, der die Entladezeitdauern mißt, bis die Spannungen des Meßkondensators sowie eines Referenzkondensators mit bekannter Kapazität einen Schwellenwert unterschreitet, und aus dem Verhältnis der Zeitdauern die Kapazität des Meßkondensators bestimmt.

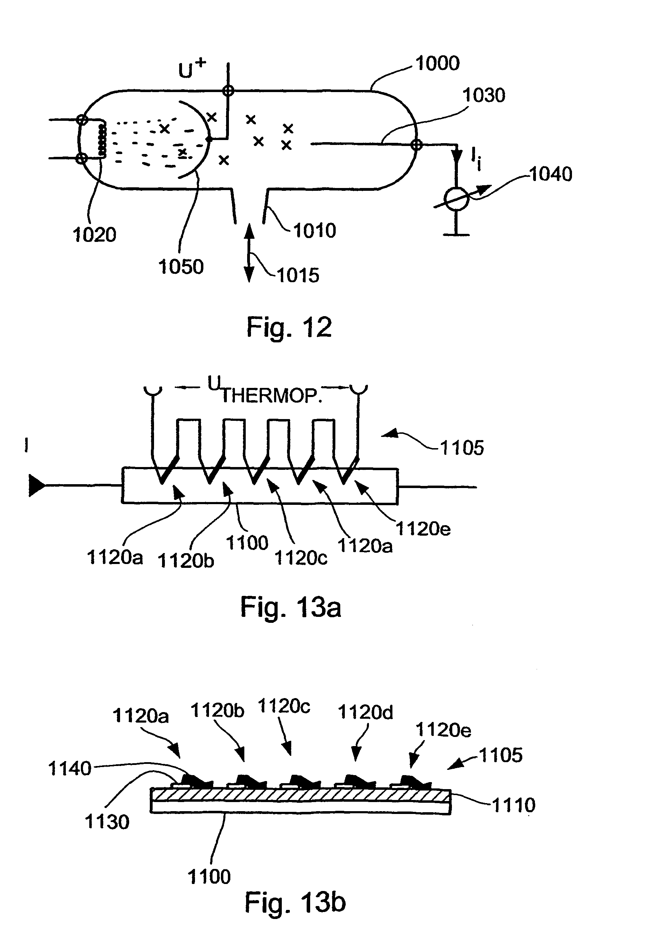

Neben den im vorhergehenden genannten Auflade- und Aufheizvorgängen ist die vorliegende Erfindung ferner auf andere oder kompliziertere physikalische Vorgänge anwendbar. Fig. 12 zeigt beispielsweise einen Sensoraufbau zur Bestimmung des Gasdruckes bzw. des Vakuums, bei dem ähnlich zu einem Ionisations-Vakuummeter ein durch Stoßionisation mit einem Elektronenstrahl erzeugter Ionenstrom zur Bestimmung des Gasdruckes verwendet wird, und der einen triodenförmigen Aufbau aufweist. Der Sensoraufbau von Fig. 12 umfaßt eine Röhre 1000 mit einem Meßgasanschluß 1010, durch den die Röhre 1000 mit einem Meßgas befüllt oder dieselbe entleert werden kann, wie es durch einen Doppelpfeil 1015 gezeigt ist, eine sich an einem Ende der Röhre 1000 befindliche Heizkathode 1020, eine sich an dem anderen Ende der Röhre 1000 befindliche Meßelektrode 1030, die über einen Strommesser 1040 gegen Masse geschaltet ist, sowie ein Anodengitter 1050, das mit einer positiven Spannung U⁺ vorgespannt ist.

Die Punkte in Fig. 12 stellen den sich durch die Potentialdifferenz zwischen der Heizkathode 1020 und dem Anodengitter 1050 einstellenden Elektronenstrom dar, während die Kreuzchen in Fig. 12 den Ionenstrom darstellen, der sich durch Stoßionisation zwischen dem Elektronenstrom und den Gasmolekülen des sich in der Röhre 1000 befindlichen Meßgases und durch die anschließende Beschleunigung der durch die Stoßionisation erzeugten negativen Ionen ergibt. Gemäß der vorliegenden Erfindung wird die Heizkathode 1020 beispielsweise lediglich so lange aufgeheizt, bis der Elektronen- oder der Ionenstrom, der die Meßelektrode 1030 erreicht und über den Strommesser 1040 zur Masse abfließt, einen ersten Stromschwellenwert passiert und einen zweiten Stromschwellenwert erreicht hat. Auf diese Weise kann aufgrund des Beitrags des Ionenstroms und dessen Abhängigkeit von dem Meßgasdruck auf den Gasdruck in der Röhre 1000 rückgeschlossen werden. Eine weitere Möglichkeit besteht darin, bei geheizter Heizkathode 1020 den Elektronenstrom beispielsweise sägezahnartig hochzuregeln, bis der Ionenstrom, der zur Meßelektrode 1030 gelangt, einen ersten Schwellenwert passiert und einen zweiten Schwellenwert erreicht. Die Zeitdifferenz ist schließlich ein Maß für den Druck in dem Behälter 1000.

Es wird ferner darauf hingewiesen, daß, obwohl im vorhergehenden als Sensorelement lediglich Drähte, Leiterbahnen, Widerstandsbahnen und dergleichen beschrieben worden sind, ebenfalls andere Meßstrecken als "Sensorelemente" möglich sind. Meßstrecken aus Metall umfassen beispielsweise ferner Leiterbahnen, wie z.B. in integrierten Schaltungen, gedruckte Leiterbahnen, Dünnschichtbahnen usw. Eine weitere mögliche Meßstrecke wird beispielsweise durch die bezugnehmend auf Fig. 12 beschriebene Meßanordnung bzw. durch den dort beschriebenen Elektronen- bzw. Ionenstrom gebildet.

In Bezug auf die im vorhergehenden beschriebenen Ausgangssignale und hinsichtlich des Vergleichs der Ausgangssignale mit vorbestimmten Schwellenwerten, um ein Über- bzw. Unterschreiten derselben durch die Ausgangssignale zu erfassen, wird darauf hingewiesen, daß ebenfalls andere Einrichtungen als Komparatoren oder Strommeßgeräte verwendbar sind, und daß ferner andere Ausgangssignale gegen Schwellenwerte verglichen werden können als Strom- oder Spannungsausgangssignale, wie z.B. die Temperatur, der Widerstandswert, die Kapazität usw. In Fig. 13a und 13b ist beispielsweise ein Sensoraufbau gezeigt, der ebenfalls eine Heizwiderstandsbahn 1100 aufweist, um hierdurch auf die im vorhergehenden beschriebene Art und Weise durch Erfassen der Heizanstiegsflanke aus der Wärmeleitfähigkeit herleitbare Meßgrößen zu bestimmen, wobei der Sensoraufbau von Fig. 13a und 13b jedoch anders als der Aufbau von Fig. 5 einen Vergleich zwischen der Temperatur des Heizwiderstandsdrahtes und einem Schwellenwert zuläßt und über den Heizwiderstandsdraht hinaus eine Thermopile 1105 aufweist, die durch eine Isolationsschicht 1110 (in Fig. 13a zur besseren Verdeutlichung nicht gezeigt) von der Heizwiderstandsbahn 1100 getrennt beabstandet von der Heizwiderstandsbahn 1100 angeordnet ist und aus einer Reihenschaltung von Thermoelementen 1120a, 1120b, 1120c, 1120d und 1120e besteht, die wiederum, wie es in Fig. 13b ersichtlich ist, aus einem ersten Material 1130 (weiß dargestellt) und einem zweiten Material 1140 (schwarz dargestellt) bestehen. Bei diesem Sensoraufbau ist die Spannung U_{THERMOP}., die zwischen den beiden Enden der Thermopile erzeugt wird, ein Maß für die Temperatur. Folglich kann bei diesem Sensoraufbau das Temperaturausgangssignal, d.h. die abgestrahlte Wärme der Heizwiderstandsbahn 1100, durch eine Kombination aus der Thermopile 1120 und einem Komparator mit einer geeigneten Schwellenwerttemperatur verglichen werden.

Es wird ferner darauf hingewiesen, daß, obwohl im vorhergehenden als Sensorelement lediglich passive Sensorelemente verwendet worden sind, d. h. solche Sensorelemente, die lediglich passiv auf das Ansteuersignal und den physikalischen Parameter reagieren, wie z. B. Meßdrähte und Kondensatoren, ferner aktive Sensorelemente verwendet werden können, die beispielsweise in Verbindung und Zusammenarbeit mit einer elektronischen Schaltung ein Ausgangssignal ausgeben, welches beispielsweise verstärkt, kalibriert, digitalisiert oder auf andere Weise verarbeitet worden ist.

Zusätzlich zu den Sensoren zur Druckerfassung bzw. Gasfüllstandserfassung und zur Wärmeleitfähigkeitserfassung und den Sensorvorrichtungen zur Flüssigkeitsfüllstandserfassung, zur Sitzplatzbelegung, zur Kopfstützenpositionserfassung, zur Herdplattenbelegungserfassung oder Ölfüllstands- und Ölqualitätserfassung, wie sie bezugnehmend auf Fig. 2 - 3, 6, 8, 9 und 10a und 10b beschrieben worden sind, sind gemäß der vorliegenden Erfindung auch Sensoren zur Dielektrizitätskonstantenerfassung und Sensorvorrichtungen möglich, die durch die erfindungsgemäße Zeitdauererfassung von Aufheizvorgängen zur Messung einer Strömung eines Fluids, zur Erfassung einer Neigung oder einer Beschleunigung des Sensors selbst, zur Erfassung einer Drehrate oder zur Erfassung eines Aggregatzustands geeignet sind. Bei einem Sensor zur Erfassung einer Neigung, einer Beschleunigung oder einer Drehrate könnte beispielsweise der Einfluß eines Konvektionsfeldes auf die Geschwindigkeit eines Aufheizvorgangs verwendet werden, um die Relativgeschwindigkeit zwischen einem als Sensorelement fungierenden Meßfaden und einem denselben umgebenden Fluid zu bestimmen. Das selbe Prinzip könnte bei einem Strömungssensor zur Erfassung der Strömungsgeschwindigkeit eines Fluids genutzt werden, welches an einem Meßfaden vorbei strömt. Bei schnellerer Strömung des Fluids nimmt die Zeitdauer zu, mit der sich der Meßfaden beim Aufheizvorgang aufheizt, so daß die Zeitdauer ein Maß für die Strömungsgeschwindigkeit ist. Bei einem Aggregatszustandssensor kann ausgenutzt werden, daß der Aggregatzustand eines einen als Sensorelement fungierenden Meßfaden umgebenden Stoffs auch die Wärmeleitfähigkeit des Stoffs verändert, so daß dies erfindungsgemäß durch die Erfassung einer Aufheizzeitdauer erfaßt werden kann.

Die im vorhergehenden erwähnten Ausführungsbeispiele setzen voraus, daß eine genügend schnelle Erfassung des Ausgangssignals, welches beispielsweise ein Temperatursignal, eine Spannung, ein Strom usw. sein kann, gewährleistet ist. Mit modernen Elektronikkomponenten ist diese Aufgabe jedoch sowohl analog als auch digital problemlos lösbar. Setzt man beispielsweise Signalprozessoren mit hoher Taktfrequenz und schnelle Komparatoren (330, 340 usw.) ein, lassen sich auch kleine Schwellenwertabstände und somit kurze Meßzeiten hinreichend genau erfassen. Insbesondere bei thermischen Vorgängen können auch Prozessoren mit integriertem oder externem A/D-Wandler Verwendung finden. Für sehr kleine Zeitabstände gibt es TDC-Bausteine mit Auflösungen im Picosekundenbereich. Ist eine gewünschte Anzeigefrequenz des Resultats vorgegeben, führt ein geringerer Schwellenwertabstand, wie z. B. zwischen SW1 und SW2 in Fig. 2, direkt zu entsprechend weiter verringertem Leistungsbedarf.

## Patentansprüche

1. Sensor zum Erfassen einer Größe eines vorbestimmten physikalischen Parameter (50), mit
einem Sensorelement (20; 390; 410; 450), an das ein vorbestimmtes Ansteuersignal anlegbar ist, und das abhängig von dem vorbestimmten physikalischen Parameter (50) und dem Ansteuersignal ein Ausgangssignal erzeugt;
einer Ansteuereinrichtung (10; 310; 460), die das Ansteuersignal derart an das Sensorelement (20; 390; 410; 450) anlegt, daß das Ausgangssignal des Sensorelements (20; 390; 410; 450) einen vorbestimmten Schwellenwert (SW; SW2; SWI-IV) erreicht; und
einer Zeitmeßschaltung (30; 300), die die Zeitdauer erfaßt, bis zu der das Ausgangssignal ausgehend von einem vorbestimmten Startwert (T_{START}; SW1; SW0) des Ausgangssignals den vorbestimmten Schwellenwert (SW; SW2; SWI-IV) erreicht, und die aus der Zeitdauer das den physikalischen Parameter (50) anzeigende Signal (40) erzeugt **dadurch gekennzeichnet** das das Ansteuersignal einen vorbestimmten Signal lauf, der zumindestens einen stetig ansteigenden order abfallenden Bereich umfasst.

2. Sensor gemäß Anspruch 1, bei dem der vorbestimmte Signalverlauf einen sägezahn-artig ansteigenden oder abfallenden Verlauf oder einen stetig ansteigenden oder abfallenden Verlauf nach einer mathematischen Funktion umfaßt.

3. Sensor gemäß Anspruch 1 oder 2, bei dem der vorbestimmte Startwert (T_{Start}) zu einem sich bei einem Gleichgewichtszustand und bei nicht angelegtem Ansteuersignal einstellenden Wert des Ausgangssignals im wesentlichen gleich ist.

4. Sensor gemäß Anspruch 1 oder 2, bei dem der vorbestimmte Startwert ein vorbestimmter Startschwellenwert (SW1) ist, wobei der Startschwellenwert (SW1) und der Schwellenwert (SW2) oberhalb eines durch Umgebungseinflüsse festgelegten Ausgangssignalbereichs des Sensors liegen.

5. Sensor gemäß Anspruch 4, **gekennzeichnet durch**
eine Einrichtung (360, 370) zum Einstellen des vorbestimmten Startschwellenwerts (SW1) und des vorbestimmten Schwellenwerts (SW2), derart, daß dieselben einen vorbestimmten und festen Abstand zu einem sich bei einem Gleichgewichtszustand und bei nicht angelegtem Ansteuersignal einstellenden Wert (Tₛₜₐᵣₜ) des Ausgangssignals aufweisen.

6. Sensor gemäß Anspruch 1, **gekennzeichnet durch**
eine Einrichtung, die das Ausgangssignal von dem Sensorelement empfängt, zum Einstellen des vorbestimmten Startwerts und des vorbestimmten Schwellenwerts gleichzeitig zu dem Anlegen des Ansteuersignals, derart, daß der Startwert gleich einem Wert des Ausgangssignals zu dem Zeitpunkt des Anlegens des Ansteuersignals ist, und der Schwellenwert einen vorbestimmten und festen Abstand zu demselben aufweist.

7. Sensor gemäß einem der Ansprüche 1 bis 6, **gekennzeichnet durch**
eine Vergleichseinrichtung (340), die das Ausgangssignal von dem Sensorelement (390) empfängt, zum Vergleichen des Ausgangssignals mit dem Startwert und zum Ausgeben eines Startsignals an die Zeitmeßschaltung (300), falls das Ausgangssignal gleich dem Startwert ist; und
eine zweite Vergleichseinrichtung (330), die das Ausgangssignal von dem Sensorelement (390) empfängt, zum Vergleichen des Ausgangssignals mit dem Schwellenwert und zum Ausgeben eines Stoppsignals an die Zeitmeßschaltung (300), falls das Ausgangssignal gleich dem Schwellenwert ist, wobei
die Zeitmeßschaltung (300) die Zeiterfassung beim Empfang des Startsignals beginnt und beim Empfang des Stoppsignals die Zeiterfassung beendet und das den physikalischen Parameter (50) anzeigende Signal (40) erzeugt.

8. Sensor gemäß einem der Ansprüche 1 bis 7, bei dem der vorbestimmte Schwellenwert einer Mehrzahl von Teilschwellenwerten (SWI, SWII, SWIII, SWIV) ist und der ferner folgende Merkmale aufweist:
eine Vergleichseinrichtung, die das Ausgangssignal von dem Sensorelement empfängt, zum Vergleichen des Ausgangssignals mit dem vorbestimmten Startwert und zum Ausgeben eines Startsignals an die Zeitmeßschaltung, falls das Ausgangssignal gleich dem Startwert ist; und
eine zweite Vergleichseinrichtung für jeden Teilschwellenwert (SWI, SWII, SWIII, SWIV), die das Ausgangssignal von dem Sensorelement empfängt, zum Vergleichen des Ausgangssignals mit dem zugeordneten Teilschwellenwert und Ausgeben eines Stoppsignals, falls das Ausgangssignal gleich dem zugeordneten Teilschwellenwert ist; und
eine Verarbeitungseinrichtung, die mit jeder zweiten Vergleichseinrichtung für die Teilschwellenwerte (SWI, SWII, SWIII, SWIV) verbunden ist, um die Stoppsignale zu empfangen, zum Auswählen eines der Stoppsignale der Mehrzahl von zweiten Vergleichseinrichtungen, derart, daß zwischen dem Startsignal und dem ausgewählten Stoppsignal eine vorbestimmte Mindestzeitdauer vergangen ist, und zum Ausgeben des ausgewählten Stoppsignals an die Zeitmeßschaltung, wobei die Zeitmeßschaltung das den physikalischen Parameter (50) anzeigende Signal (40) aus der Zeitdauer und dem dem ausgewählten Stoppsignal zugeordneten Schwellenwert erzeugt.

9. Sensor gemäß einem der Ansprüche 1 bis 8, bei dem das Sensorelement (20; 390; 410; 450) ein resistives Element ist, die Ansteuereinrichtung (310; 460) eine Stromquelle ist und das Ausgangssignal einer Temperatur, einer Spannung oder einem Widerstandswert entspricht.

10. Sensor gemäß Anspruch 9, bei dem das resistive Element entweder ein elektrisch leitfähiger Widerstandsmeßfaden ist, der auf oder in einer Folie laminiert ist, eine aufgedruckte Widerstandsbahn oder eine Dünnschichtbahn ist.

11. Sensor gemäß einem der Ansprüche 1 bis 10, bei dem der physikalische Parameter aus einer Gruppe ausgewählt ist, die aus Druck, Wärmeleitfähigkeit und Dielektrizitätskonstante einer Umgebung des Sensorelements besteht.

12. Sensor gemäß einem der Ansprüche 1 bis 11, bei dem die Ansteuereinrichtung entweder eine Einrichtung zum Aufheizen, eine Einrichtung zum Aufladen des Sensorelements, eine Einrichtung zum Erzeugen von Elektronen oder eine Einrichtung zum Erzeugen eines Ionenstromes aufweist.

13. Sensor gemäß einem der Ansprüche 1 bis 12, bei dem die Ansteuereinrichtung das Ansteuersignal reduziert, nachdem das Ausgangssignal des Sensors einen obersten Schwellenwert erreicht hat.

14. Sensorvorrichtung zum Erfassen einer durch einen physikalischen Parameter (50) bestimmbaren Meßgröße mit
einem Sensor gemäß einem der Ansprüche 1 bis 13;
eine **gekennzeichnet durch** Auswerteeinrichtung, die basierend auf dem den physikalischen Parameter (50) anzeigenden Signal (40) des Sensors auf die Meßgröße rückschließt und dieselbe ausgibt.

15. Sensorvorrichtung gemäß Anspruch 14, bei der die Meßgröße aus einer Gruppe ausgewählt ist, die den Füllstand eines Tanks einer Flüssigkeit, in die ein resistives Element als das Sensorelement (410) hineinragt, den Füllstand eines Gasbehälters, in dem sich ein resistives Element als dem Sensorelement befindet, die Ölqualität von Öl, in dem ein resistives Element als dem Sensorelement vollständig eingebracht ist, die Strömungsgeschwindigkeit eines Fluids, mit dem sich ein resistives Element als dem Sensorelement in Kontakt befindet, einen Aggregatzustand eines Stoffes, mit dem sich ein resistives Element als dem Sensorelement in Kontakt befindet, und die Neigung, Beschleunigung und die Drehrate der Sensorvorrichtung, die einen Sensor mit einem resistiven Element als dem Sensorelement aufweist, das sich mit einem Fluid in einem fluidgefüllten Behälter in Kontakt befindet, umfaßt.

16. Verfahren zum Erfassen einer Größe eines vorbestimmten physikalischen Parameter (50), wobei das Verfahren folgende Schritte aufweist:
Anlegen eines vorbestimmten Ansteuersignals mit einem vorbestimmten Signalverlauf an ein Sensorelement (20; 390; 410; 450), an das das Ansteuersignal anlegbar ist, und das abhängig von dem vorbestimmten physikalischen Parameter (50) und dem Ansteuersignal ein Ausgangssignal erzeugt, derart, daß das Ausgangssignal des Sensorelements (20; 390; 410; 450) einen vorbestimmten Schwellenwert erreicht;
Erfassen der Zeitdauer, bis zu der das Ausgangssignal ausgehend von einem vorbestimmten Startwert des Ausgangssignals den vorbestimmten Schwellenwert erreicht; und
Erzeugen des den vorbestimmten physikalischen Parameter (50) anzeigenden Signals (40) aus der Zeitdauer **dadurch gekennzeichnet** das das Ansteuersignal zumindest einen stetig ansteigenden oder abfallenden Bereich umfasst.

17. Verfahren gemäß Anspruch 16, bei dem der vorbestimmte Signalverlauf einen sägezahn-artig ansteigenden oder abfallenden Verlauf oder einen stetig ansteigenden oder abfallenden Verlauf nach einer mathematischen Funktion umfaßt.

18. Verfahren gemäß Anspruch 16 oder 17, bei dem der vorbestimmte Startwert ein vorbestimmter Startschwellenwert ist, wobei der Startschwellenwert und der Schwellenwert außerhalb eines zulässigen Bereichs von Werten des Ausgangssignals liegen, und wobei das Verfahren ferner folgende Schritte aufweist:
Trennen des Ansteuersignals von dem Sensorelement, sobald das Ausgangssignal den vorbestimmten Schwellenwert erreicht hat und so lange, bis das Ausgangssignal den Startwert erneut erreicht oder unterschritten hat; und
erneutes Anlegen eines Ansteuersignals an das Sensorelement, wodurch der Meßzyklus abgeschlossen und ein nächster Meßzyklus begonnen wird.

19. Verfahren gemäß einem der Ansprüche 16 bis 18, bei dem der Schwellenwert ein Teilschwellenwert einer Mehrzahl von Teilschwellenwerten ist, und bei dem der Schritt des Erfassens ferner folgende Teilschritte aufweist:
Vergleichen des Ausgangssignals mit dem Startwert;
falls das Ausgangssignal gleich dem Startwert ist, Beginnen einer Zeiterfassung;
Vergleichen des Ausgangssignals mit jedem der Mehrzahl von Teilschwellenwerten;
falls das Ausgangssignal gleich einem der Mehrzahl von Teilschwellenwerten ist und falls von dem Beginn der Zeitdauer an eine vorbestimmte Mindestzeitdauer vergangen ist, Beenden der Zeiterfassung,
wobei die Zeitdauer die Zeit ist, die von dem Beginn der Zeiterfassung bis zu der Beendigung der Zeiterfassung vergeht, und wobei bei dem Schritt des Erzeugens des den vorbestimmten Parameter (50) anzeigenden Signals (40) dasselbe aus der Zeitdauer und dem einen der Mehrzahl von Schwellenwerten erzeugt wird.

20. Verfahren gemäß Anspruch 16 **gekennzeichnet durch** das Rückschließen auf die Meßgröße aus einem aus der erfaßten Zeitdauer erzeugten, den vorbestimmten physikalischen Parameter (50) anzeigenden Signal (40).

21. Verfahren gemäß Anspruch 20, bei dem der vorbestimmte Signalverlauf einen sägezahn-artig ansteigenden oder abfallenden Verlauf oder einen stetig ansteigenden oder abfallenden Verlauf nach einer mathematischen Funktion umfaßt.

## Claims

1. A sensor for acquiring a quantity of a predetermined physical parameter (50), comprising a sensor element (20; 390; 410; 450), to which a predetermined control signal can be applied, wherein said sensor element generates an output signal in dependence on the predetermined physical parameter (50) and the control signal;
a control device (10; 310; 460) that applies the control signal to the sensor element (20; 390; 410; 450) in such a way that the output signal of the sensor element (20; 390; 410; 450) reaches a predetermined threshold value (SW; SW2; SWI-IV); and
a timing circuit (30; 300) that measures the time required for the output signal to reach the predetermined threshold value (SW; SW2; SWI-IV) from a predetermined start value (T_{START}; SW1; SW0) and generates the signal (40) that is representative of the physical parameter (50) from this duration, **characterized in that** the control signal has a predetermined signal sequence with at least one continuously ascending or descending segment.

2. The sensor according to Claim 1, wherein the predetermined signal sequence has a sequence that ascends or descends in a sawtooth-like fashion or a continuously ascending or descending sequence in accordance with a mathematical function.

3. The sensor according to Claim 1 or 2, wherein the predetermined start value (T_{START}) is essentially identical to a value of the output signal that is adjusted in a state of equilibrium and when no control signal is applied.

4. The sensor according to Claim 1 or 2, wherein the predetermined start value is a predetermined start threshold value (SW1), and wherein the start threshold value (SW1) and the threshold value (SW2) lie above an output signal range of the sensor that is defined by ambient influences.

5. The sensor according to Claim 4, **characterized by** a device (360, 370) for setting the predetermined start threshold value (SW1) and the predetermined threshold value (SW2) in such a way that they are spaced apart from a value (T_{START}) of the output signal that is adjusted in a state of equilibrium and when no control signal is applied.

6. The sensor according to Claim 1, **characterized by** a device that receives the output signal of the sensor element in order to adjust the predetermined start value and the predetermined threshold value at the same time the control signal is applied, namely such that the start value is identical to a value of the output signal at the time at which the control signal is applied, and in that the threshold value is spaced apart from said start value by a predetermined and fixed distance.

7. The sensor according to one of Claims 1-6, **characterized in**
a comparison device (340) that receives the output signal of the sensor element (390) in order to compare the output signal with the start value and to output a start signal for the timing circuit (300) when the output signal is identical to the start value; and by
a second comparison device (330) that receives the output signal of the sensor element (390) in order to compare the output signal with the threshold value and to output a stop signal for the timing circuit (300) when the output signal is identical to the threshold value, wherein
the timing circuit (300) begins the time measurement when the start signal is received, stops the time measurement when the stop signal is received and generates the signal (40) representative of the physical parameter (50).

8. The sensor according to one of Claims 1 to 7, wherein the predetermined threshold value consists of a plurality of partial threshold values (SWI, SWII, SWIII, SWIV) and has the following characteristics:
a comparison device that receives the output signal of the sensor element in order to compare the output signal with the predetermined start value and to output a start signal for the timing circuit when the output signal is identical to the start value;
a second comparison device for each partial threshold value (SWI, SWII, SWIII, SWIV) that the output signal receives from the sensor element in order to compare the output signal with the assigned partial threshold value and to output a stop signal when the output signal is identical to the assigned partial threshold value; and
a processing device that is connected to each second comparison device for the partial threshold values (SWI, SWII, SWIII, SWIV) so as to receive the stop signals and serves for selecting one of the stop signals of the plurality of second comparison devices, namely in such a way that a predetermined minimum duration elapses between the start signal and the selected stop signal, as well as for outputting the selected stop signal for the timing circuit, wherein the timing circuit generates the signal (40) representative of the physical parameter (50) from the duration and the threshold value assigned to the selected stop signal.

9. The sensor according to one of Claims 1 to 8, wherein the sensor element (20; 390; 410; 450) is a resistive element, the control device (310; 460) is a power source and the output signal corresponds to a temperature, a voltage or a resistance value.

10. The sensor according to Claim 9, wherein the resistive element either consists of an electrically conductive resistance measuring filament that is laminated on or in a film, a printed strip resistor or a thin film strip.

11. The sensor according to one of Claims 1 to 10, wherein the physical parameter is selected from a group consisting of the pressure, the thermal conductivity and the permittivity of surroundings of the sensor element.

12. The sensor according to one of Claims 1 to 11, wherein the control device either features a device for heating, a device for charging the sensor element, a device for generating electrons or a device for generating an ion current.

13. The sensor according to one of Claims 1 to 12, wherein the control device reduces the control signal after the output signal of the sensor has reached an uppermost threshold value.

14. A sensor device for acquiring a measured quantity that may be representative of a physical parameter (50) by means of a sensor according to one of Claims 1 to 13, **characterized in** an evaluation device that deduces and outputs the measured quantity based on the signal (40) of the sensor that is representative of the physical parameter (50).

15. The sensor device according to Claim 14, wherein the measured quantity is selected from a group that comprises the filling level of a tank containing a liquid, into which the sensor element (410) protrudes in the form of a resistive element, the filling level of a gas receptacle, in which the sensor element in the form of a resistive element is situated, the oil quality of oil, in which the sensor element in the form of a resistive element is completely immersed, the flow speed of a fluid that is in contact with the sensor element in the form of a resistive element, a state of aggregation of a substance that is in contact with the sensor element in the form of the resistive element and the inclination, acceleration and rotational speed of the sensor device that features a sensor with a sensor element in the form of a resistive element that is in contact with a fluid in a fluid-filled receptacle.

16. A method for acquiring a quantity of a predetermined physical parameter (50), wherein said method comprises the following steps:
applying a predetermined control signal with a predetermined signal sequence to a sensor element (20; 390; 410; 450), to which the control signal can be applied, wherein said sensor element generates an output signal in dependence on the predetermined physical parameter (50) and the control signal, namely in such a way that the output signal of the sensor element (20; 390; 410; 450) reaches a predetermined threshold value;
measuring the duration required for the output signal to reach the predetermined threshold value from a predetermined start value of the output signal; and
generating the signal (40) that is representative of the predetermined physical parameter (50) from this duration, **characterized in that** the control signal comprises at least one continuously ascending or descending segment.

17. The method according to Claim 16, wherein the predetermined signal sequence has a sequence that ascends or descends in a sawtooth-like fashion or a continuously ascending or descending sequence in accordance with a mathematical function.

18. The method according to Claim 16 or 17, wherein the predetermined start value is a predetermined start threshold value, wherein the start threshold value and the threshold value lie outside a permissible range of output signal values, and
wherein the method furthermore comprises the following steps:
separating the control signal from the sensor element as soon as the output signal has reached the predetermined threshold value, namely until the output signal has once again reached or fallen short of the start value; and
once again applying the control signal to the sensor element such that the measuring cycle is completed and a next measuring cycle begins.

19. The method according to one of Claims 16 to 18, wherein the threshold value is a partial threshold value of a plurality of partial threshold values, and wherein the acquisition furthermore comprises the following partial steps:
comparing the output signal with the start value;
beginning a time measurement when the output signal is identical to the start value;
comparing the output signal with each of the plurality of partial threshold values;
stopping the time measurement when the output signal is identical to one of the plurality of partial threshold values and a predetermined minimum duration has elapsed since the beginning of the time measurement,
wherein said duration is the time that elapses between the beginning of the time measurement and the completion of the time measurement, and
wherein the signal (40) that is representative of the predetermined parameter (50) is generated from the duration and the threshold value of the plurality of threshold values during the step of generating the signal that is representative of the predetermined parameter.

20. The method according to Claim 16, **characterized in** deducing the measured quantity from a signal (40) that is generated from the measured duration and is representative of the predetermined physical parameter (50).

21. The method according to Claim 20, wherein the predetermined signal sequence has a sequence that ascends or descends in a sawtooth-like fashion or a continuously ascending or descending sequence in accordance with a mathematical function.

## Revendications

1. Détecteur pour détecter une dimension d'un paramètre physique prédéterminé (50), avec un élément détecteur (20 ; 390 ; 410 ; 450), sur lequel peut être appliqué un signal d'activation prédéfini, et qui en fonction du paramètre physique prédéfini (50) et du signal d'activation délivre un signal de sortie ;
un dispositif d'activation (10 ; 310 ; 460), qui applique le signal d'activation sur l'élément détecteur (20 ; 390 ; 410 ; 450) de sorte que le signal de sortie de l'élément détecteur (20 ; 390 ; 410 ; 450) atteigne une valeur seuil prédéfinie (SW ; SW2 ; SWI-IV) ; et
un circuit de chronométrage (30 ; 300), détectant la durée périodique jusqu'à ce que le signal de sortie atteigne à partir d'une valeur de démarrage prédéfinie (T_{START}; SW1; SW0) du signal de sortie, la valeur seuil prédéfinie (SW ; SW2 ; SWI-IV) et qui, à partir de la durée périodique délivre le signal (40) indiquant le paramètre physique (50), **caractérisé en ce que** le signal d'activation comprend une allure de signal prédéfinie, comprenant au moins une plage à croissance ou à décroissance constante.

2. Détecteur selon la revendication 1, **caractérisé en ce que** l'allure de signal prédéfinie comprend une allure croissante ou décroissante en dents de scie, ou une allure constamment croissante ou décroissante selon une fonction mathématique.

3. Détecteur selon la revendication 1 ou 2, dans lequel la valeur de démarrage prédéfinie (T_{START}) est sensiblement identique à une valeur s'établissant pour le signal de sortie dans un état d'équilibre et lorsque le signal d'activation n'est pas appliqué.

4. Détecteur selon la revendication 1 ou 2, dans lequel la valeur de démarrage prédéfinie est une valeur de démarrage seuil prédéfinie (SW1), la valeur de démarrage seuil (SW1) et la valeur seuil (SW2) étant supérieures à une plage de signal de sortie du détecteur, déterminée par les influences environnementales.

5. Détecteur selon la revendication 4, **caractérisé par**
un dispositif (360, 370) pour le réglage de la valeur de démarrage seuil prédéfinie (SW1) et de la valeur seuil prédéfinie (SW2), de sorte que ces dernières présentent un écart prédéfini et fixe par rapport à une valeur (T_{START}) du signal de sortie s'établissant lors d'un état d'équilibre et lorsque le signal d'activation n'est pas appliqué.

6. Détecteur selon la revendication 1, **caractérisé par**
un dispositif réceptionnant le signal de sortie de l'élément détecteur, pour le réglage de la valeur de démarrage prédéfinie et de la valeur seuil prédéfinie, simultanément à l'application du signal d'activation, de sorte que la valeur de démarrage soit identique à une valeur du signal de sortie au moment de l'application du signal d'activation, et que la valeur seuil présente un écart prédéfini et fixe par rapport à ce dernier.

7. Détecteur selon l'une quelconque des revendications 1 à 6, **caractérisé par**
un dispositif comparateur (340), réceptionnant le signal de sortie de l'élément détecteur (390), pour la comparaison du signal de sortie avec la valeur de démarrage et pour la délivrance d'un signal de démarrage à l'attention du circuit de chronométrage (300), si le signal de sortie est identique à la valeur de démarrage ; et un deuxième dispositif comparateur (330), réceptionnant le signal de sortie de l'élément détecteur (390), pour la comparaison du signal de sortie avec la valeur seuil et pour la délivrance d'un signal d'arrêt au circuit de chronométrage (300), si le signal de sortie est identique à la valeur seuil,
le circuit de chronométrage (300) commençant le chronométrage lors de la réception du signal de démarrage et terminant le chronométrage lors de la réception du signal d'arrêt et délivrant le signal (40) indiquant le paramètre physique (50).

8. Détecteur selon l'une quelconque des revendications 1 à 7, dans lequel la valeur seuil prédéfinie est l'une parmi une pluralité de valeurs seuils partielles (SWI, SWII, SWIII, SWIV) et présentant par ailleurs les attributs suivants
un dispositif comparateur, réceptionnant le signal de sortie de l'élément détecteur, pour la comparaison du signal de sortie avec la valeur de démarrage prédéfinie et pour la délivrance d'un signal de démarrage au circuit de chronométrage, si le signal de sortie est identique à la valeur de démarrage ; et
un deuxième dispositif comparateur pour chaque valeur seuil partielle (SWI, SWII, SWIII, SWIV), réceptionnant le signal de sortie de l'élément détecteur, pour la comparaison du signal de sortie avec la valeur seuil partielle associée et pour la délivrance d'un signal d'arrêt, si le signal de sortie est identique à la valeur seuil partielle associée ; et
un dispositif de traitement qui est relié avec chaque deuxième dispositif comparateur pour les valeurs seuils partielles (SWI, SWII, SWIII, SWIV), pour réceptionner les signaux d'arrêt, pour sélectionner l'un des signaux d'arrêt de la pluralité de deuxièmes dispositifs comparateurs, de sorte qu'une durée périodique minimale prédéfinie se soit écoulée entre le signal de démarrage et le signal d'arrêt sélectionné, et pour délivrer le signal d'arrêt sélectionné au circuit de chronométrage, le circuit de chronométrage délivrant le signal (40) indiquant le paramètre physique (50) à partir de la durée périodique et de la valeur seuil associée au signal d'arrêt sélectionné.

9. Détecteur selon l'une quelconque des revendications 1 à 8, dans lequel l'élément détecteur (20 ; 390 ; 410 ; 450) est un élément résistif, le dispositif d'activation (310 ; 460) est une source de courant et le signal de sortie correspond à une température, à une tension ou à une valeur de résistance.

10. Détecteur selon la revendication 9, dans lequel l'élément résistif est soit un fil de mesure de la résistance conducteur d'électricité, qui est laminé sur ou dans un film, une bande de résistance imprimée ou un bande en couche mince.

11. Détecteur selon l'une quelconque des revendications 1 à 10, dans lequel le paramètre physique est sélectionné dans un groupe consistant en la pression, la conductibilité thermique et la constance diélectrique d'un environnement de l'élément détecteur.

12. Détecteur selon l'une quelconque des revendications 1 à 11, dans lequel le dispositif d'activation comporte soit un dispositif d'échauffement, un dispositif de charge de l'élément détecteur, un dispositif de création d'électrons ou un dispositif de création d'un courant ionique.

13. Détecteur selon l'une quelconque des revendications 1 à 12, dans lequel le dispositif d'activation réduit le signal d'activation, après que le signal de sortie du détecteur ait atteint une valeur seuil supérieure.

14. Dispositif de détection pour détecter une dimension de mesure définissable par un paramètre physique (50), avec un détecteur selon l'une quelconque des revendications 1 à 13, **caractérisé par**
un dispositif d'évaluation, qui sur la base du signal (40) du détecteur, indiquant le paramètre physique (50) déduit la dimension de mesure et délivre cette dernière.

15. Dispositif de détection selon la revendication 14, dans lequel la valeur de mesure est sélectionnée dans un groupe comprenant le niveau de remplissage d'un réservoir avec un liquide, dans lequel un élément résistif saillit en faisant office de l'élément détecteur (410), le niveau de remplissage d'un réservoir à gaz, dans lequel se trouve un élément résistif faisant office de l'élément détecteur, la qualité d'une huile, dans laquelle un élément résistif est totalement introduit, en faisant office de l'élément détecteur, la vitesse d'écoulement d'un fluide, avec lequel un élément résistif est en contact en faisant office de l'élément détecteur, un état d'agrégation d'une matière, avec laquelle un élément résistif se trouve en contact en faisant office de l'élément détecteur et l'inclinaison, l'accélération et le taux de rotation du dispositif de détection comportant un détecteur avec un élément résistif faisant office de l'élément détecteur, qui se trouve en contact avec un fluide dans un réservoir rempli de fluide.

16. Procédé de détection d'une dimension d'un paramètre physique prédéterminée (50), le procédé comportant les étapes suivantes :
application d'un signal d'activation prédéfini avec une allure de signal prédéfinie sur un élément détecteur (20 ; 390 ; 410 ; 450), sur lequel le signal d'activation est applicable et qui en fonction du paramètre physique prédéfini (50) et du signal d'activation délivre un signal de sortie, de sorte que le signal de sortie de l'élément détecteur (20 ; 390 ; 410 ; 450) atteigne une valeur seuil prédéfinie ;
détection d'une durée périodique, jusqu'à laquelle sur la base d'une valeur de démarrage prédéfinie du signal de sortie, le signal de sortie atteint la valeur seuil prédéfinie ; et
délivrance d'un signal (40) indiquant le paramètre physique (50) prédéfini, à partir de la durée périodique, **caractérisé en ce que** le signal d'activation comprend au moins une plage constamment croissante ou décroissante .

17. Procédé selon la revendication 16, **caractérisé en ce que** l'allure de signal prédéfinie comprend une allure croissante ou décroissante en dents de scie, ou une allure constamment croissante ou décroissante selon une fonction mathématique.

18. Procédé selon la revendication 16 ou 17, dans lequel la valeur de démarrage redéfinie est une valeur de démarrage seuil prédéfinie, la valeur de démarrage seuil et la valeur seuil se situant à l'extérieur d'une plage autorisée de valeurs du signal de sortie et le procédé comportant par ailleurs les étapes suivantes :
séparation du signal d'activation de l'élément détecteur, dès que le signal de sortie a atteint la valeur seuil prédéfinie et jusqu'à ce que le signal de sortie ait de nouveau atteint ou soit inférieur à la valeur de démarrage ; et
nouvelle application d'un signal d'activation sur l'élément détecteur, ce qui a pour effet d'achever le cycle de mesure et de commencer un prochain cycle de mesure.

19. Procédé selon l'une quelconque des revendications 16 à 18, dans lequel la valeur seuil est une valeur seuil partielle d'une pluralité de valeurs seuils partielles et dans lequel l'étape de détection comporte par ailleurs les étapes partielles suivantes :
comparaison du signal de sortie avec la valeur de démarrage ;
si le signal de sortie est identique à la valeur de démarrage, début d'un chronométrage ;
comparaison du signal de sortie avec chacune de la pluralité des valeurs seuils partielles ;
si le signal de sortie est identique à l'une parmi la pluralité des valeurs seuils, et si une durée périodique minimale prédéfinie s'est écoulée depuis le début de la période, achèvement du chronométrage,
la durée périodique étant la durée qui s'écoule entre le début du chronométrage et l'achèvement du chronométrage et lors de l'étape de délivrance du signal (40) indiquant le paramètre (50) prédéfini, celui-ci étant délivré à partir de la durée périodique et de l'une parmi la pluralité des valeurs seuils.

20. Procédé selon la revendication 16, **caractérisé par**
la déduction de la valeur de mesure à partir d'un signal (40) délivré à partir de la durée périodique détectée, indiquant le paramètre physique prédéfini (50) .

21. Procédé selon la revendication 20, dans lequel l'allure de signal prédéfinie comprend une allure croissante ou décroissante en dents de scie, ou une allure constamment croissante ou décroissante selon une fonction mathématique.
